(19) Europäisches Patentamt / European Patent Office / Office européen des brevets

(11) **EP 4 456 612 A1**

(12) **EUROPEAN PATENT APPLICATION**
published in accordance with Art. 153(4) EPC

(43) Date of publication:
**30.10.2024 Bulletin 2024/44**

(21) Application number: **22909999.9**

(22) Date of filing: **20.12.2022**

(51) International Patent Classification (IPC):
**H04W 52/14** $^{(2009.01)}$      **G01S 13/66** $^{(2006.01)}$

(52) Cooperative Patent Classification (CPC):
**H04W 52/14; H04W 72/044; H04W 72/23;**
**G01S 13/66**

(86) International application number:
**PCT/CN2022/140336**

(87) International publication number:
**WO 2023/116687 (29.06.2023 Gazette 2023/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **22.12.2021  CN 202111583321**

(71) Applicant: **VIVO MOBILE COMMUNICATION CO.,**
**LTD.**
**Dongguan, Guangdong 523863 (CN)**

(72) Inventors:
• **DING, Shengli**
**Dongguan, Guangdong 523863 (CN)**
• **JIANG, Dajie**
**Dongguan, Guangdong 523863 (CN)**
• **LI, Jianzhi**
**Dongguan, Guangdong 523863 (CN)**
• **WU, Jianming**
**Dongguan, Guangdong 523863 (CN)**

(74) Representative: **Lavoix**
**Bayerstraße 83**
**80335 München (DE)**

(54) **TRANSMISSION POWER DETERMINATION METHOD AND APPARATUS, AND DEVICE**

(57)    This application discloses a transmit power determining method and apparatus, and a device, and belongs to the field of integrated sensing and communication. The method in embodiments of this application includes: determining, by a first device, target transmit power of a first signal based on echo signal quality of a first target or a parameter of the first target, where the target transmit power indicates sending of the first signal at a second moment; and the first device detects an echo signal of the first signal sent at a first moment to obtain the echo signal quality of the first target or the parameter of the first target; or the first device receives the echo signal quality of the first target or the parameter of the first target from a second device, and the second device detects the echo signal of the first signal sent at the first moment to obtain the echo signal quality of the first target or the parameter of the first target, where the second moment is after the first moment; and the parameter of the first target includes at least one of an RCS of the first target and distance information of the first target.

FIG. 6

**Description**

**CROSS-REFERENCE TO RELATED APPLICATIONS**

The present disclosure claims priority to Chinese Patent Application No. 202111583321.5, filed in China on December 22, 2021, which is incorporated by reference in its entirety.

**TECHNICAL FIELD**

The present disclosure relates to the field of communication technologies, and specifically, to a transmit power determining method and an apparatus, and a device.

**BACKGROUND**

A future wireless communication system is expected to provide various high-precision sensing services, such as indoor positioning for robot navigation, Wi-Fi sensing for smart homes, and radar sensing for autonomous vehicles. A sensing system and a communication system are often designed separately and occupy different bands. Due to widespread deployment of millimeter wave and massive multiple input multiple output (MIMO) technologies, a communication signal in the future wireless communication system tends to have high resolution in both time domain and angle domain, making it possible to implement high-precision sensing by using the communication signal. Therefore, the sensing system and the communication system may be designed jointly, so that a same band and same hardware can be shared, to improve spectral efficiency of the band and reduce hardware costs. Thus, the research on integrated sensing and communication (ISAC) is prompted. ISAC may become a key technology in the future wireless communication system, to support many important application scenarios. For example, in a future autonomous vehicle network, an autonomous vehicle obtains a large amount of information from the network, including ultra-high-resolution maps and near-real-time information, to navigate and avoid upcoming traffic jams. In a same case, a radar sensor in the autonomous vehicle should be able to provide a powerful and high-resolution obstacle detection function with resolution on the order of centimeters. An ISAC technology for the autonomous vehicle provides a possibility to implement high data rate communication and high-resolution obstacle detection using same hardware and spectrum resources. Other applications of ISAC include Wi-Fi-based indoor positioning and activity recognition, communication and sensing of unmanned aerial vehicles, extended reality (XR), radar-communication integration, and the like. Each application has different requirements, limitations, and regulatory issues.

Radar detection, that is, performing distance measurement, speed measurement, and angle measurement by using a reflected echo of a target, may be used as one of important use cases of integrated sensing and communication. However, a radar technology in an integrated sensing and communication scenario has many differences from conventional radar technologies due to differences in constraints and application targets.

**SUMMARY**

Embodiments of the present disclosure provide a transmit power determining method and an apparatus, and a device, which can optimize system performance and use of power resources in an integrated sensing and communication scenario.

According to a first aspect, a transmit power determining method is provided, and includes:

determining, by a first device, target transmit power of a first signal based on an echo signal quality of a first target or a parameter of the first target, where the target transmit power indicates sending of the first signal at a second moment; and
the first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, where
the second moment is after the first moment; and the parameter of the first target includes at least one of a radar cross section RCS of the first target and distance information of the first target.

According to a second aspect, a transmit power determining method is provided, and includes:

determining, by a third device, a candidate transmit power value of a first signal based on a radar cross section RCS of a sensing target and a maximum operating distance of radar detection included in a sensing requirement; and determining, by the third device, initial transmit power of the first signal based on the candidate transmit power value of the first signal, a transmit power requirement of a communication function in an integrated sensing and communication application, and maximum transmit power of a transmit end device.

According to a third aspect, a transmit power determining apparatus is provided, and is used in a first device. The apparatus includes:

a first determining module, configured to determine target transmit power of a first signal based on an echo signal quality of a first target or a parameter of the first target, where the target transmit power indicates sending of the first signal at a second moment; and

the first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, where

the second moment is after the first moment; and the parameter of the first target includes at least one of a radar cross section RCS of the first target and distance information of the first target.

According to a fourth aspect, a transmit power determining apparatus is provided, and is used in a third device. The apparatus includes:

a fourth determining module, configured to determine a candidate transmit power value of a first signal based on a radar cross section RCS of a sensing target and a maximum operating distance of radar detection included in a sensing requirement; and

a fifth determining module, configured to determine initial transmit power of the first signal based on the candidate transmit power value of the first signal, a transmit power requirement of a communication function in an integrated sensing and communication application, and maximum transmit power of a transmit end device.

According to a fifth aspect, a first device is provided. The first device includes a processor and a memory, where the memory stores a program or instructions runnable on the processor, and the program or the instructions, when executed by the processor, implement steps of the method according to the first aspect.

According to a sixth aspect, a first device is provided, and includes a processor and a communication interface, where the processor is configured to determine target transmit power of a first signal based on an echo signal quality of a first target or a parameter of the first target, where the target transmit power indicates sending of the first signal at a second moment; and the first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, where the second moment is after the first moment; and the parameter of the first target includes at least one of a radar cross section RCS of the first target and distance information of the first target.

According to a seventh aspect, a third device is provided. The third device includes a processor and a memory, where the memory stores a program or instructions runnable on the processor, and the program or the instructions, when executed by the processor, implement steps of the method according to the second aspect.

According to an eighth aspect, a third device is provided, and includes a processor and a communication interface, where the processor is configured to determine a candidate transmit power value of a first signal based on a radar cross section RCS of a sensing target and a maximum operating distance of radar detection included in a sensing requirement; and determine initial transmit power of the first signal based on the candidate transmit power value of the first signal, a transmit power requirement of a communication function in an integrated sensing and communication application, and maximum transmit power of a transmit end device.

According to a ninth aspect, a readable storage medium is provided. The readable storage medium stores a program or instructions, where the program or the instructions, when executed by a processor, implement steps of the method according to the first aspect, or implement steps of the method according to the second aspect.

According to a tenth aspect, a chip is provided. The chip includes a processor and a communication interface, where the communication interface is coupled to the processor, and the processor is configured to run a program or instructions, to implement the method according to the first aspect, or implement the method according to the second aspect.

According to an eleventh aspect, a computer program product is provided. The computer program product is stored in a storage medium. The computer program product is executed by at least one processor to implement steps of the method according to the first aspect, or implement steps of the method according to the second aspect.

In the embodiments of the present disclosure, a first device adaptively adjusts transmit power of a first signal based on an echo signal quality of a first target or a parameter of the first target, to save time, energy, and other resources as much as possible while meeting a sensing requirement, so that performance of an integrated sensing and communication system and use of power resources can be optimized.

## BRIEF DESCRIPTION OF THE DRAWINGS

FIG. 1 is a block diagram of a wireless communication system to which the embodiments of the present disclosure are applicable;

FIG. 2 is a first flowchart of steps of a transmit power determining method according to an embodiment of the present disclosure;

FIG. 3 is a schematic diagram 1 of a connection relationship among a transmit end device, a receive end device, and a sensing function network element in a transmit power determining method according to an embodiment of the present disclosure;

FIG. 4 is a schematic diagram 2 of a connection relationship among a transmit end device, a receive end device, and a sensing function network element in a transmit power determining method according to an embodiment of the present disclosure;

FIG. 5 is a schematic diagram 3 of a connection relationship among a transmit end device, a receive end device, and a sensing function network element in a transmit power determining method according to an embodiment of the present disclosure;

FIG. 6 is a second flowchart of steps of a transmit power determining method according to an embodiment of the present disclosure;

FIG. 7 is a first schematic structural diagram of a transmit power determining apparatus according to an embodiment of the present disclosure;

FIG. 8 is a second schematic structural diagram of a transmit power determining apparatus according to an embodiment of the present disclosure;

FIG. 9 is a first schematic structural diagram of a communication device according to an embodiment of the present disclosure; and

FIG. 10 is a second schematic structural diagram of a communication device according to an embodiment of the present disclosure.

## DETAILED DESCRIPTION

The following clearly describes the technical solutions in the embodiments of the present disclosure with reference to the accompanying drawings in the embodiments of the present disclosure. Apparently, the described embodiments are some embodiments of the present disclosure rather than all of the embodiments. All other embodiments obtained by a person of ordinary skill in the art based on the embodiments of the present disclosure fall within the protection scope of the present disclosure.

The specification and claims of the present disclosure, and terms "first" and "second" are used to distinguish similar objects, but are unnecessarily used to describe a specific sequence or order. It should be understood that the terms in such a way are interchangeable in proper circumstances, so that the embodiments of the present disclosure can be implemented in other orders than the order illustrated or described herein. Objects distinguished by "first" and "second" are usually one type, and the quantity of objects is not limited. For example, the first object may be one or more than one. In addition, in the specification and the claims, "and/or" means at least one of the connected objects, and the character "/" generally indicates an "or" relationship between the associated objects.

It should be noted that, the technologies described in the embodiments of the present disclosure are not limited to a long term evolution (LTE) system or an LTE-advanced (LTE-A) system, and can also be used in other wireless communication systems, such as, code division multiple access (CDMA), time division multiple access (TDMA), frequency division multiple access (FDMA), orthogonal frequency division multiple access (OFDMA), and single-carrier frequency division multiple access (SC-FDMA). The terms "system" and "network" in the embodiments of the present disclosure are often used interchangeably, and the described technology can be used not only for the above systems and radio technologies, but also for other systems and radio technologies. The following description describes a new radio (NR) system for example objectives, and NR terms are used in most of the description below, but these technologies are also applicable to applications other than NR system applications, such as a 6th generation (6G) communication system.

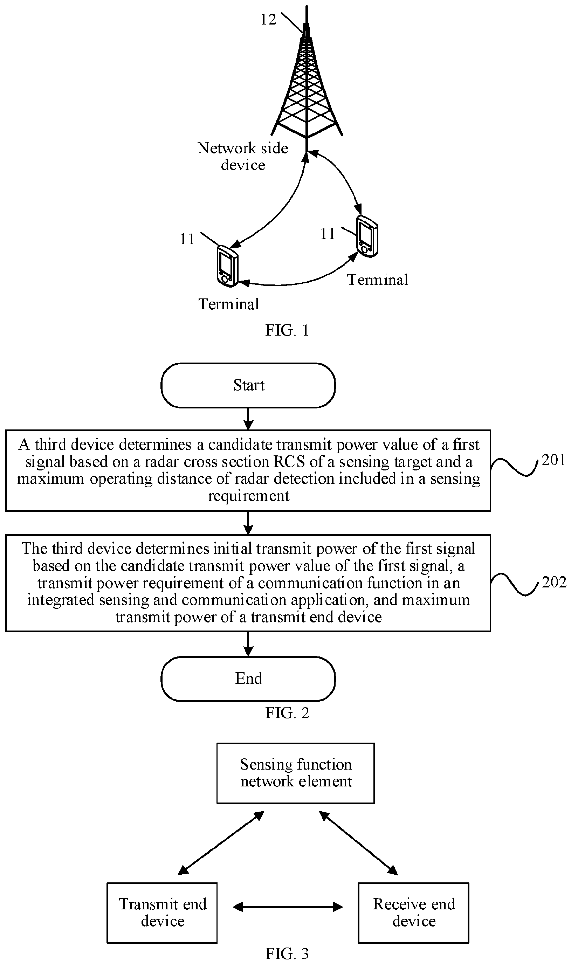

FIG. 1 is a block diagram of a wireless communication system to which the embodiments of the present disclosure are applicable. The wireless communication system includes a terminal 11 and a network side device 12. The terminal 11 may be a terminal-side device such as a mobile phone, a tablet personal computer, a laptop computer also referred to as a notebook computer, a personal digital assistant (PDA), a palmtop computer, a netbook, an ultra-mobile personal computer (UMPC), a mobile internet device (MID), an augmented reality (AR)/virtual reality (VR) device, a robot, a wearable device, a vehicle user equipment (VUE), or a pedestrian user equipment (PUE), a smart home (a home device with a wireless communication function, such as a refrigerator, a TV, a washing machine, or furniture), a game console, a personal computer (PC), a teller machine, or a self-service machine. The wearable device includes: a smart watch, a smart band, smart earphones, smart glasses, smart jewelry (a smart bracelet, a smart chain bracelet, a smart ring, a smart necklace, a smart anklet, or a smart chain anklet), a smart wristband, a smart clothing, or the like. It should be noted that, a specific type of the terminal 11 is not limited in the embodiments of the present disclosure. The network side device 12 may include an access network device or a core network device, where the access network device may be referred to as a radio access network device, a radio access network (RAN), a radio access network function, or a radio access network unit. The access network device may include a base station, a wireless local area network (WLAN) access point, a Wi-Fi node, or the like. The base station may be referred to as a NodeB, an evolved nodeB (eNB), an access point, a base transceiver station (BTS), a radio base station, a radio transceiver, a basic service set (BSS), an extended service set (ESS), a home nodeB, a home evolved nodeB, a transmitting receiving point (TRP), or another appropriate term in the field, as long as the same technical effect is achieved. The base station is not limited to a specific technical term. It should be noted that, a base station in the NR system is used as an example for description in the embodiments of the present disclosure, and a specific type of the base station is not limited.

A transmit power determining method and an apparatus, and a device provided in the embodiments of the present disclosure are described below through some embodiments and application scenarios thereof with reference to the accompanying drawings.

In an integrated sensing and communication wireless sensing application, a radar technology may use a monostatic radar mode, or may use a bistatic radar mode.

In the monostatic radar mode, a same antenna is shared when signals are transmitted and received, and a received signal and a transmitted signal enter different radio frequency processing links through a circulator. In such the mode, continuous wave signal waveforms may be used to implement detection without blind zones, on the premise that the received signal and the transmitted signal need to be well isolated. An isolation of about 100 dB is usually required to eliminate flooding of the received signal caused by leakage of the transmitted signal. Because a monostatic radar receiver has all information of the transmitted signal, signal processing can be performed through matching filtering (pulse compression) to obtain a higher signal processing gain.

In the bistatic radar mode, there is no need to isolate transmitted and received signals, greatly simplifying the complexity of hardware. Because radar signal processing is based on known information, in the integrated sensing and communication application, radar signal processing can be performed by using the known information such as a synchronization signal and a reference signal. However, due to a periodicity of the synchronization signal, the reference signal, and the like, a ambiguity diagram of a signal waveform is no longer in a thumbtack shape but in a bed of nails shape, and ambiguity of delay and Doppler are increased, and a gain of a main lobe is much lower than that of the monostatic radar mode, reducing distance and speed measurement ranges. Through designing an appropriate parameter set, the distance and speed measurement ranges can meet measurement requirements of common targets such as cars and pedestrians. In addition, measurement precision of a bistatic radar is related to locations of transmitting or receiving stations relative to a target. Therefore, a pair of proper transmitting or receiving stations needs to be selected to improve detection performance.

It should be noted that, a first device and a third device provided in the embodiments of the present disclosure may be respectively a base station, a transmitting receiving point (TRP), a terminal device (UE), a radio access point (AP), a reconfigurable intelligence surface (RIS), and the like.

The transmit power determining method provided in the embodiments of the present disclosure may also be understood as a transmit power adaptation method, including a transmit power adaptation method in a search mode, and a transmit power adaptation method in a tracking mode.

The search mode refers to a process of discovering a target by traversing various angle intervals, and/or distance intervals, and/or speed intervals within a range specified by sensing prior information in a sensing requirement at an initial stage of radar detection; and once a target parameter is obtained, the search mode ends. The target parameter includes at least one of the following: an azimuth, a pitch angle, a distance, and a speed.

The tracking mode means that after discovering the target and obtaining the target parameter through the foregoing search mode, a radar continuously detects the target at the target parameter or within a specific range including the target parameter, and uses a detection result to update the target parameter.

Referring to FIG. 2, FIG. 2 is a first flowchart of steps of a transmit power determining method in a search mode according to an embodiment of the present disclosure. The transmit power determining method includes the following steps.

Step 201: A third device determines a candidate transmit power value of a first signal based on a radar cross section RCS of a sensing target and a maximum operating distance of radar detection included in a sensing requirement.

Step 202: The third device determines initial transmit power of the first signal based on the candidate transmit power value of the first signal, a transmit power requirement of a communication function in an integrated sensing and communication application, and maximum transmit power of a transmit end device.

In this embodiment of the present disclosure, in the search mode, the initial transmit power of the first signal is set to cover a maximum operating distance for a typical sensing target in the sensing requirement.

For example, the sensing target is a vehicle, a pedestrian, an unmanned aerial vehicle, or the like, and a typical RCS value $\sigma_{RCS}$ of the sensing target is set based on results of sensing channel measurement and channel modeling. For example, a typical RCS of a pedestrian is -3 dBm$^2$, a typical RCS of a motorcycle is 0 dBm$^2$, and a typical RCS of a van is 13 dBm$^2$.

For another example, in the sensing requirement, a sensing distance range of the sensing target requires to set a maximum operating distance $R_{max}$ of radar detection.

For a monostatic radar, the candidate transmit power value $P_i$ is directly proportional to fourth power of the maximum operating distance $R_{max}$, and the candidate transmit power value $P_i$ is inversely proportional to the RCS value

$$P_i \propto \frac{R_{max}^4}{\sigma_{RCS}}$$

$\sigma_{RCS}$. In other words, .

For a bistatic radar, the candidate transmit power value $P_i$ is directly proportional to a maximum value of a product of a distance $R_t$ of the target relative to a transmit end and a distance $R_r$ of the target relative to a receive end, and the candidate transmit power value $P_i$ is inversely proportional to the RCS value $\sigma_{RCS}$. In other words,

$$P_i \propto \frac{\left(R_t R_r\right)_{max}^2}{\sigma_{RCS}}$$

.

Optionally, the candidate transmit power value may be set in a continuous setting manner, in other words, any value in a pre-configured power interval may be set as the candidate transmit power value; or the candidate transmit power value may be set in a stepping setting manner, in other words, in the pre-configured power interval, a corresponding candidate transmit power value is set at a specific stepping interval.

In at least one embodiment of the present disclosure, step 202 includes:

determining through comparison, by the third device, the greater one of the candidate transmit power value of the first signal and the transmit power requirement of the communication function in the integrated sensing and communication application; and
determining the initial transmit power of the first signal as the maximum transmit power in a case that the determined greater one of the candidate transmit power value and the transmit power requirement is greater than the maximum transmit power of the transmit end device; or determining the initial transmit power of the first signal as the greater one of the candidate transmit power value and the transmit power requirement in a case that the determined greater one of the candidate transmit power value and the transmit power requirement is less than the maximum transmit power of the transmit end device.

In other words, the setting of the initial transmit power also needs to consider the transmit power requirement of the communication function in an integrated sensing and communication scenario, and the maximum transmit power of the transmit end device. Optionally, different transmit end devices may set different maximum transmit power, which are not specifically limited herein.

It should be noted that, the setting of the initial transmit power also needs to consider existence of large-scale and small-scale fading in signal transmission in the integrated sensing and communication scenario; and needs to reserve a power margin, such as 3 dB, on the basis of the initial transmit power obtained based on the foregoing relationship. An actual power margin needs to be set according to a channel modeling case, which is not specifically limited herein.

Optionally, the third device is a transmit end device of the first signal, or a receive end device of the first signal, or a sensing function network element. The sensing function network element involved in this embodiment of the present disclosure refers to a network node that is in a core network and/or a radio access network and that is responsible for at least one of functions such as sensing request processing, sensing resource scheduling, sensing information interaction, and sensing data processing; and may be a network node upgraded based on an access and mobility management function (AMF) or a location management function (LMF) in an existing 5G network, or may be another existing or newly defined network node. For convenience of description, they are collectively referred to as the sensing function network element in the present disclosure.

For a bistatic radar (or dual-base-station radar) scenario, the transmit end device and the receive end device are different devices. In this case, a connection relationship among the sensing function network element, the transmit end device, and the receive end device and a corresponding information interaction method are divided into the following three cases:

(1) There is a direct communication connection between any two of the sensing function network element, the transmit end device, and the receive end device, as shown in FIG. 3. In this case, any two may directly perform information interaction.

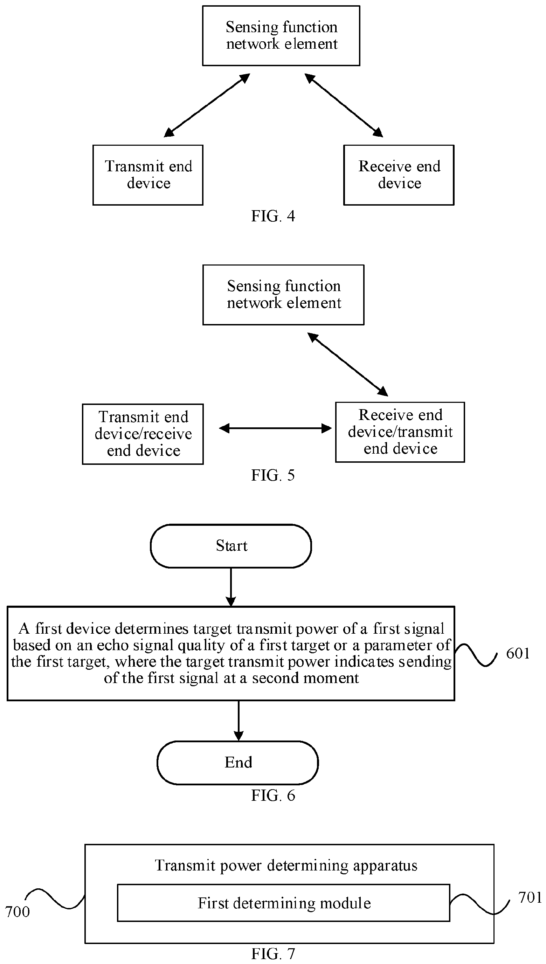

(2) There is a direct communication connection between the sensing function network element and both the transmit end device and the receive end device, but there is no direct communication connection between the transmit end device and the receive end device, as shown in FIG. 4. In this case, the sensing function network element may directly perform information interaction with the transmit end device or the receive end device, and information interaction between the transmit end device and the receive end device needs to be forwarded by the sensing function network element.

(3) There is a direct communication connection between the sensing function network element and only the transmit end device or the receive end device, but there is a direct communication connection between the transmit end device and the receive end device, as shown in FIG. 5. In this case, a device having a direct communication connection with the sensing function network element may directly perform information interaction with the sensing function network element, and interaction between a device having no direct communication connection with the sensing function network element and the sensing function network element needs to be forwarded by the device having the direct communication connection with the sensing function network element.

For a monostatic radar (or single-base-station radar) scenario, the transmit end device and the receive end device are a same device. In this case, a connection relationship between the sensing function network element and the transmit end device (namely, the receive end device) is generally a direct communication connection, and information interaction may be directly performed between the two; or the connection relationship between the two is a connection performed through a third-party device, so that information interaction may be performed between the two through the third-party device.

In other words, in this embodiment of the present disclosure, a device that configures the initial transmit power may be the transmit end device, or may be the receive end device, or may be the sensing function network element.

In a case that the third device is the transmit end device, the transmit end device sends the first signal based on the initial transmit power.

Alternatively, in a case that the third device is the receive end device or the sensing function network element,

the receive end device or the sensing function network element sends the determined initial transmit power of the first signal to the transmit end device; and
the transmit end device sends the first signal based on the initial transmit power determined by the sensing function network element or the receive end device.

Optionally, after the transmit end device sends the first signal, if the receive end device or the sensing function network element indicates that a first target is found, a transmit power adaptation method in a tracking mode is entered. If the receive end device or the sensing function network element indicates that the first target is not found, it is considered that there is no target corresponding to the RCS within a range described in the sensing requirement.

In conclusion, in this embodiment of the present disclosure, in a search mode, a third device adaptively adjusts initial transmit power of a first signal based on a sensing requirement, to save time, energy, and other resources as much as possible while meeting the sensing requirement, so that performance of an integrated sensing and communication system and use of power resources can be optimized.

Referring to FIG. 6, FIG. 6 shows a transmit power determining method in a tracking mode according to an embodiment of the present disclosure. The transmit power determining method includes the following steps.

Step 601: A first device determines target transmit power of a first signal based on an echo signal quality of a first target or a parameter of the first target, where the target transmit power indicates sending of the first signal at a second moment.

The first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, where

the second moment is after the first moment; and the parameter of the first target includes at least one of a radar cross section RCS of the first target and distance information of the first target.

Optionally, in this embodiment of the present disclosure, the first signal may be sent by the first device, or may be sent by the second device. For example, in a monostatic radar scenario, the first device sends the first signal, and the first device detects the echo signal of the first signal sent at the first moment to obtain the echo signal quality of the first target or the parameter of the first target. Alternatively, in the monostatic radar scenario, the first device sends the first signal; the first device detects the echo signal of the first signal sent at the first moment to obtain echo data, and sends the echo data to the second device; and the second device obtains the echo signal quality of the first target or the parameter of the first target based on the echo data. For another example, in a bistatic radar scenario, the second device sends the first signal, and the first device detects the echo signal of the first signal sent at the first moment to obtain the echo signal quality of the first target or the parameter of the first target. Alternatively, in the bistatic radar scenario, the second device sends the first signal; the first device detects the echo signal of the first signal sent at the first moment to obtain echo data, and sends the echo data to a sensing function network element; and the sensing function network element obtains the echo signal quality of the first target or the parameter of the first target based on the echo data.

Optionally, a device that detects the first target may be a receive end device, or may be the sensing function network element. For example, the receive end device obtains the echo data of the first signal, and the receive end device directly detects the first target; or the receive end device transmits the echo data to the sensing function network element after obtaining the echo data of the first signal, and the sensing function network element detects the first target; or the receive end device performs part of operations of radar signal processing to obtain an intermediate result after obtaining the echo data of the first signal, and sends the intermediate result to the sensing function network element, and the sensing function network element detects the first target.

Optionally, in this embodiment of the present disclosure, a device that determines the target transmit power of the first signal may be a transmit end device, or may be the receive end device, or may be the sensing function network element.

Further, the device that detects the first target and the device that determines the target transmit power of the first signal may be a same device, or may be different devices, which are not specifically limited herein.

In a case that the device that determines the target transmit power of the first signal is the transmit end device, the transmit end device sends the first signal based on the target transmit power of the first signal.

In a case that the device that determines the target transmit power of the first signal is the receive end device or the sensing function network element, the receive end device or the sensing function network element sends transmit power adjustment information to the transmit end device based on the determined target transmit power of the first signal, and the transmit end device sends the first signal based on the target transmit power of the first signal, where the transmit power adjustment information includes any one of the following:

the target transmit power of the first signal;
a difference between the target transmit power of the first signal and transmit power of the first signal sent at the first moment; and
a ratio of the target transmit power of the first signal to the transmit power of the first signal sent at the first moment.

In at least one embodiment of the present disclosure, the echo signal quality of the first target includes at least one of the following:

echo signal power of the first target;
an echo signal noise ratio (SNR) of the first target;
an echo signal-to-noise plus interference ratio (SINR) of the first target;
reference signal received power (RSRP) of the echo signal of the first target; and
a reference signal received quality (RSRQ) of the echo signal of the first target.

Optionally, the echo signal power of the first target includes at least one of the following:
If the first signal is a sensing dominant signal or an integrated sensing and communication signal, the echo signal power of the first target is full power of the echo signal.

If the first signal is a communication dominant signal or a sensing-enhanced communication dominant signal, such as a 5G NR signal or a Wi-Fi signal, the echo signal power of the first target is power of a preamble (preamble) in the echo signal, and/or a synchronization signal, and/or a reference signal, where the reference signal may be a demodulation reference signal (DM-RS), a phase-tracking reference signal (PT-RS), a channel state information reference signal (CSI-RS), a positioning reference signal (P-RS), a channel sounding reference signal (SRS), or the like.

In at least one embodiment of the present disclosure, that the first device determines the target transmit power of the first signal based on the echo signal quality of the first target in step 601 includes:

determining, by the first device, the target transmit power of the first signal based on an echo signal quality of the first target at the first moment; or
determining, by the first device, the target transmit power of the first signal based on a predicted distance of the first target at the second moment and the echo signal quality of the first target at the first moment.

In at least one embodiment of the present disclosure, a target of performing adaptive transmit power adjustment based on the echo signal quality of the first target includes the following content:
Target 1: Maintain the echo signal quality of the first target near a first preset echo quality. An expression manner may be $P_{r0} \pm \Delta P_r$, where $P_{r0}$ is the first preset echo quality that is preset, and $\Delta P_r$ is an allowed echo quality error.
Alternatively, target 2: Maintain the echo signal quality of the first target within a first echo quality range. An expression manner of the preset first echo quality range may be $[P_{r\min}, P_{r\max}]$, where $P_{r\min}$ is a lower limit value of the first echo quality range, and $P_{r\max}$ is an upper limit value of a preset echo signal power range.
Optionally, the method further includes:
determining the first preset echo quality or the first echo quality range based on a first condition, where the first condition includes at least one of the following:

an echo signal quality of a sensing metric requirement in a sensing requirement;
an echo signal quality corresponding to transmit signal power required by a communication quality of a communication function in an integrated sensing and communication application; and
an echo signal quality required by an interference level limitation of the communication function in the integrated sensing and communication application.

For example, when the first preset echo quality is a preset echo signal power value, a method for determining the preset echo signal power value includes:

(a) An echo signal power value that meets the sensing metric requirement in the sensing requirement, or an echo signal power value that meets the sensing metric requirement in the sensing requirement and has a specific margin reserved, where the sensing metric requirement may be sensing precision, and a detection probability/false alarm probability.
(b) In the communication function in the integrated sensing and communication application, an echo signal power value corresponding to the transmit signal power that meets the requirement of the communication quality, and an echo signal power value that meets the requirement of the interference level limitation.

For another example, in a case that the first echo quality range is an echo signal power range, a method for determining a lower limit value of the echo signal power range includes:

(a) Lowest echo signal received power that meets the sensing metric requirement in the sensing requirement, where the sensing metric requirement may be sensing precision, and a detection probability/false alarm probability.
(b) An echo signal power value corresponding to a critical transmit signal power value that meets a beam failure of the communication function in the integrated sensing and communication application.

A method for determining an upper limit value of the echo signal power range includes:

(a) Corresponding echo signal power when a sensing metric reaches a specific level, where the sensing metric requirement may be the sensing precision, and the detection probability/false alarm probability.
(b) An echo signal power value that meets the requirement of the interference level limitation of the communication function in the integrated sensing and communication application.

In at least one embodiment of the present disclosure, the determining, by the first device, the target transmit power of the first signal based on the echo signal quality of the first target at the first moment includes:

determining, in a case that the echo signal quality of the first target is determined to be maintained near a first preset echo quality, the target transmit power of the first signal based on transmit power of the first signal sent at the first moment, the echo signal quality of the first target at the first moment, and the first preset echo quality; or
determining, in a case that the echo signal quality of the first target is determined to be maintained within a first echo quality range, the target transmit power of the first signal based on the transmit power of the first signal sent at the first moment, the echo signal quality of the first target at the first moment, and the first echo quality range.

The determining the target transmit power of the first signal based on the transmit power of the first signal sent at the first moment, the echo signal quality of the first target at the first moment, and the first preset echo quality includes: determining the target transmit power of the first signal based on a first formula, where the first formula is:

$$P'_t = \frac{P_{r0}}{P_r} P_t$$

$P'_t$ is the target transmit power of the first signal; $P_t$ is the transmit power of the first signal sent at the first moment; $P_{r0}$ is the first preset echo quality; and $P_r$ is the echo signal quality of the first target at the first moment.

The determining the target transmit power of the first signal based on the transmit power of the first signal sent at the first moment, the echo signal quality of the first target at the first moment, and the first echo quality range includes: determining the target transmit power of the first signal based on a second formula, where the second formula is:

$$P'_t = \frac{P}{P_r} P_t$$

$P'_t$ is the target transmit power of the first signal; $P_t$ is the transmit power of the first signal sent at the first moment; and $P_r$ is the echo signal quality of the first target at the first moment.

In a case that the echo signal quality of the first target at the first moment is greater than an upper limit echo quality of the first echo quality range, P is the upper limit echo quality of the first echo quality range. In this case, the second formula is $P'_t = \frac{P_{r\max}}{P_r} P_t$ , where $P_{r\max}$ is the upper limit echo quality of the first echo quality range.

Alternatively, in a case that the echo signal quality of the first target at the first moment is less than a lower limit echo quality of the first echo quality range, P is the lower limit echo quality of the first echo quality range. In this case, the second formula is $P'_t = \frac{P_{r\min}}{P_r} P_t$ , where $P_{\min}$ is the lower limit echo quality of the first echo quality range.

Alternatively, in any case, P is an arithmetic mean or a geometric mean of the upper limit echo quality and the lower limit echo quality of the first echo quality range. In this case, the second formula is $P'_t = \frac{P_{rmid}}{P_r} P_t$ , where $P_{mid}$ is an arithmetic mean or a geometric mean of the upper limit echo quality and the lower limit echo quality of the first echo quality range. The arithmetic mean is understood as $\left(P_{r\max} + P_{r\min}\right)\Big/2$ ; and the geometric mean is understood as $\sqrt{P_{r\max} P_{r\min}}$ .

In at least one embodiment of the present disclosure, the determining, by the first device, the target transmit power of the first signal based on the predicted distance of the first target at the second moment and the echo signal quality of the first target at the first moment includes:

determining, in a case that the echo signal quality of the first target is determined to be maintained near a first preset echo quality, the target transmit power of the first signal based on transmit power of the first signal sent at the first moment, the echo signal quality of the first target at the first moment, the first preset echo quality, and the predicted distance of the first target at the second moment; or

determining, in a case that the echo signal quality of the first target is determined to be maintained within a first echo quality range, the target transmit power of the first signal based on the transmit power of the first signal sent at the first moment, the echo signal quality of the first target at the first moment, the first echo quality range, and the predicted distance of the first target at the second moment.

Optionally, prediction for the distance of the first target at the second moment is based on maintaining a motion trajectory of the first target and predicting a location of the first target at the second moment, to obtain the predicted distance at the second moment.

A premise assumption of the prediction method is that when tracking the first target, because a moving speed of a typical target (such as a vehicle or a pedestrian) of the integrated sensing and communication application is a low-speed target relative to a sensing update rate, a target status change between two adjacent rounds of radar detection is small. That a target status change is small mainly means that a change of a target RCS is small. It can be considered that the target RCS remains almost unchanged in two adjacent rounds of radar detection or a plurality of consecutive rounds of radar detection. There are the following two conditions to meet this case: First, a maneuver of the target is small, that is, acceleration is small, and changes of a location and a speed of the target are not large, so that a linear filtering algorithm such as Kalman filtering can be used. Second, a change of a sensing channel characteristic (large-scale and small-scale fading characteristics) is not large, especially a change of the small-scale fading characteristic is not large. The prediction method is device implementation content, which is not limited thereto.

The determining the target transmit power of the first signal based on the transmit power of the first signal sent at the first moment, the echo signal quality of the first target at the first moment, the first preset echo quality, and the predicted distance of the first target at the second moment includes:

determining the target transmit power of the first signal based on a third formula, where the third formula includes:

$$P_t' = \left(\frac{R'}{R}\right)^4 \frac{P_{r0}}{P_r} P_t$$ (a monostatic radar), or $$P_t' = \left(\frac{R_t' R_r'}{R_t R_r}\right)^2 \frac{P_{r0}}{P_r} P_t$$ (a bistatic radar) $P_t'$ is the target transmit power of the first signal; $P_t$ is the transmit power of the first signal sent at the first moment; $P_{r0}$ is the first preset echo quality; $P_r$ is the echo signal quality of the first target at the first moment; R is a distance between the first target and a signal transceiver device at the first moment in the monostatic radar scenario; $R'$ is a predicted distance between the first target and the signal transceiver device at the second moment in the monostatic radar scenario; $R_t$ is a distance

between the first target and the transmit end device at the first moment in the bistatic radar scenario; $R_t'$ is a predicted distance between the first target and the transmit end device at the second moment in the bistatic radar scenario; $R_r$ is

a distance between the first target and the receive end device at the first moment in the bistatic radar scenario; and $R_r'$ is a predicted distance between the first target and the receive end device at the second moment in the bistatic radar scenario.

The determining the target transmit power of the first signal based on the transmit power of the first signal sent at the first moment, the echo signal quality of the first target at the first moment, the first echo quality range, and the predicted distance of the first target at the second moment includes:

determining the target transmit power of the first signal based on a fourth formula, where the fourth formula includes:

$$P_t' = \left(\frac{R'}{R}\right)^4 \frac{P}{P_r} P_t, \text{ or } P_t' = \left(\frac{R_t' R_r'}{R_t R_r}\right)^2 \frac{P}{P_r} P_t$$

$P_t'$ is the target transmit power of the first signal; $P_t$ is the transmit power of the first signal sent at the first moment; $P_r$ is the echo signal quality of the first target at the first moment; R is a distance between the first target and a signal transceiver device at the first moment in the monostatic radar scenario; $R'$ is a predicted distance between the first target and the signal transceiver device at the second moment in the monostatic radar scenario; $R_t$ is a distance between the first target and the transmit end device at the first moment in the bistatic radar scenario; $R_t'$ is a predicted distance between the first target and the transmit end device at the second moment in the bistatic radar scenario; $R_r$ is a distance

between the first target and the receive end device at the first moment in the bistatic radar scenario; and $R_r'$ is a predicted distance between the first target and the receive end device at the second moment in the bistatic radar scenario.

In a case that the echo signal quality of the first target at the first moment is greater than an upper limit echo quality of the first echo quality range, P is the upper limit echo quality of the first echo quality range. In this case, the fourth formula is $P_t' = \left(\dfrac{R'}{R}\right)^4 \dfrac{P_{r\max}}{P_r} P_t$ , where $P_{r\max}$ is the upper limit echo quality of the first echo quality range.

Alternatively, in a case that the echo signal quality of the first target at the first moment is less than a lower limit echo quality of the first echo quality range, P is the lower limit echo quality of the first echo quality range. In this case, the fourth formula is $P_t' = \left(\dfrac{R'}{R}\right)^4 \dfrac{P_{r\min}}{P_r} P_t$ , where $P_{r\min}$ is the lower limit echo quality of the first echo quality range.

Alternatively, in any case, P is an arithmetic mean or a geometric mean of the upper limit echo quality and the lower limit echo quality of the first echo quality range. In this case, the fourth formula is $P_t' = \left(\dfrac{R'}{R}\right)^4 \dfrac{P_{rmid}}{P_r} P_{t}$ , where $P_{mid}$ is an arithmetic mean or a geometric mean of the upper limit echo quality and the lower limit echo quality, of the first echo quality range. The arithmetic mean is understood as $\left(P_{r\max} + P_{r\min}\right) \Big/ 2$ ; and the geometric mean is understood as $\sqrt{P_{r\max} P_{r\min}}$ .

In at least one embodiment of the present disclosure, before the determining the target transmit power of the first signal based on the parameter of the first target in step 601, the method further includes:

> determining the RCS of the first target based on echo signal power of the first target and a first distance of the first target relative to a transceiver device; or
> determining the RCS of the first target based on the echo signal power of the first target, a second distance of the first target relative to a transmit end device, and a third distance of the first target relative to a receive end device.

In this embodiment of the present disclosure, the RCS of the first target is specifically a real-time RCS of the first target, where the real-time RCS of the first target is calculated based on real-time echo power of a target signal and a real-time distance of the target; and in an integrated sensing and communication application scenario, the real-time RCS of the first target changes with a relative location between the first target and the radar. When a same target is detected at different angles, an RCS has a specific change range. For example, when a van is detected at different angles, an RCS range thereof is roughly -5 dBm² to 25 dBm² (with a carrier frequency of 26 Ghz); and when a pedestrian is detected at different angles, an RCS range thereof is roughly -10 dBm² to 0 dBm² (with a carrier frequency of 26 Ghz). After the radar intercepts the first target, an actual RCS value of the first target under current observation may be calculated based on the echo signal power of the first target and a distance of the first target relative to the radar.

For example, in the monostatic radar scenario, the real-time RCS of the target is calculated based on the echo signal power and a distance R of a sensing target. For another example, in the bistatic radar scenario, the real-time RCS of the target is calculated based on the echo signal power, a distance of the target relative to a transmitter, and a distance of the target relative to a receiver.

It should be noted that, when the echo signal includes reflection echoes of a plurality of targets, an echo signal component corresponding to a current tracking target is distinguished through time delay domain and angle domain filtering, and echo signal power of the current tracking target is calculated accordingly, thereby calculating the RCS of the current target.

Correspondingly, the determining the target transmit power of the first signal based on the parameter of the first target in step 601 includes that

> in the monostatic radar scenario, the target transmit power of the first signal is directly proportional to fourth power of the first distance, and the target transmit power of the first signal is inversely proportional to the RCS of the first target; or

in the bistatic radar scenario, the transmit power of the first signal at the second moment is directly proportional to a square of a product of the second distance and the third distance, and the target transmit power of the first signal is inversely proportional to the RCS of the first target.

Optionally, if the transmit power at the second moment is set based on the parameter of the first target, the setting of the transmit power at the second moment also needs to consider a transmit power requirement of the communication function in the integrated sensing and communication scenario, and maximum transmit power of the transmit end device. Optionally, different transmit end devices may set different maximum transmit power, which are not specifically limited herein.

Optionally, if the transmit power at the second moment is set based on the parameter of the first target, the setting of the transmit power at the second moment also needs to consider existence of large-scale and small-scale fading in signal transmission in the integrated sensing and communication scenario; and needs to reserve a power margin, such as 3 dB, on the basis of the transmit power at the second moment obtained based on the foregoing relationship. An actual power margin needs to be set according to a channel modeling case, which is not specifically limited herein.

It should be noted that, the transmit end device and the receive end device involved in this embodiment of the present disclosure are one device in the monostatic radar scenario, and are different devices in the bistatic radar scenario.

It should be further noted that, the first moment and the second moment involved in this embodiment of the present disclosure may be understood as at least one first sensing frame and at least one second sensing frame. Transmission and receiving of signals, and signal processing are all by using a sensing frame as a time unit. In other words, transmit power of signals in a same sensing frame remains unchanged. The adaptive transmit power adjustment method provided in this embodiment of the present disclosure is to adjust transmit power of a transmit signal in next sensing frame.

In conclusion, in this embodiment of the present disclosure, in a case that a first target is detected based on echo data of a first signal, a first device adaptively adjusts transmit power of the first signal based on an echo signal quality of the first target or a parameter of the first target, to save time, energy, and other resources as much as possible while meeting a sensing requirement, so that performance of an integrated sensing and communication system and use of power resources can be optimized.

To describe more clearly the transmit power determining method provided in this embodiment of the present disclosure, the following is described with reference to two examples.

Example 1: Monostatic radar power adaptation

1. At an initial moment of sensing, the transmit end device sets a sensing signal configuration parameter based on a sensing target parameter, the sensing metric requirement, and sensing prior information in the sensing requirement, and capability information of the transmit end device.

The sensing target parameter includes at least one of the following:

a distance/delay;
a speed/Doppler; and
an angle.

A sensing metric includes at least one of the following:

distance measurement/angle measurement/speed measurement resolution;
distance measurement/angle measurement/speed measurement precision;
a distance measurement/angle measurement/speed measurement range;
an RCS requirement of the sensing target;
a maneuvering characteristic (acceleration) of the sensing target;
a sensing data rate (an update rate of the sensing target parameter per unit time, in Hz); and
a detection probability/false alarm probability.

The sensing prior information is to narrow a sensing time/space operating range, and includes at least one of the following:

Sensing target parameters are the same but sensing metrics are different: A sensing metric in the prior information is worse than the sensing metric in the sensing requirement. For example, the sensing target parameters are a distance, and distance measurement precision in the sensing metric requirement is on an order of cm, while distance measurement precision in the sensing prior information is on an order of m.

Sensing target parameters are different: Information given in the sensing prior information is not information corresponding to the sensing target parameter. For example, the sensing target parameter is a distance, while information given in the sensing prior information is a target angle.

The sensing signal configuration parameter includes at least one of the following:

a signal frequency and an operating bandwidth, where if the first signal is an orthogonal frequency division multiplex (OFDM) signal, a subcarrier spacing of the OFDM signal, a quantity of resource elements (REs) spaced by a sensing signal in frequency domain, and a quantity of OFDM symbols spaced by the sensing signal in time domain are also included;
a transmit/receive beam width, a beam direction, and a beam scanning range;
sensing frame (also referred to as sensing burst) duration;
a duty cycle and a pulse periodicity of a pulse signal; and
transmit power.

A process of setting the sensing signal configuration parameter processes based on the sensing metric requirement includes at least one of the following:

setting the operating bandwidth based on a distance measurement resolution requirement;
setting the transmit beam width and the receive beam width based on an angle measurement resolution requirement;
setting the sensing pulse (burst) duration based on a speed measurement resolution requirement;
setting, based on a distance measurement range requirement, a quantity of OFDM symbols spaced by the OFDM signal in time domain, or the duty cycle and the pulse periodicity of the pulse signal;
setting the transmit power and a transmit/receive beam gain based on a distance measurement range, the target RCS, and a distance measurement/angle measurement/speed measurement precision requirement;
setting the beam scanning range based on an angle measurement range requirement; and
setting, based on a speed measurement range requirement, the subcarrier spacing of the OFDM signal and a quantity of REs spaced in frequency domain, or the pulse periodicity of the pulse signal.

2. The transmit end device or the sensing function network element sets a first candidate initial transmit power value based on a sensing precision requirement in the sensing requirement, a typical RCS of the sensing target, and sensing resolution.

Then, the transmit end device sets the final initial signal transmit power based on the transmit power requirement of the communication function in integrated sensing and communication application, a maximum transmit power requirement in a relevant regulation, and the first candidate initial transmit power value.

Specifically, the initial signal transmit power needs to be greater than or equal to the first candidate initial transmit power value, and greater than or equal to lowest transmit signal power required by the communication function. In addition, the initial signal transmit power needs to be less than or equal to a maximum transmit power value.

3. The transmit end device generates and transmits the first signal based on the sensing signal configuration parameter and the transmit power, and receives a target reflected echo signal of the first signal, to obtain target echo data; performs echo signal processing; and obtains an echo signal measurement quantity. If the sensing signal configuration parameter and the transmit power are set by the sensing function network element, the transmit end device further receives the sensing signal configuration parameter and the transmit power before the transmit end device generates the first signal.

The first signal may be any one of the following:

a communication dominant signal, for example, an NR signal, an LTE signal, or a Wi-Fi signal;
a sensing dominant signal, for example, a radar signal, including: an orthogonal frequency division multiplexing (OFDM) radar signal (including a phase-encoded OFDM radar signal), a linear frequency modulation (LFM) signal, a simple pulse train signal, a phase-encoded radar signal, or the like;
a sensing-enhanced communication dominant signal, for example, an NR signal with time-frequency domain density of a reference signal redesigned for a sensing function; and
an integrated sensing and communication signal: a new signal waveform specially designed for the integrated sensing and communication scenario, which may include: a signal waveform designed for reference signal applicability based on an NR signal, a multi-symbol OFDM pulse signal waveform, or the like.

A waveform of the first signal may be a continuous wave waveform, or may be a pulse waveform.

4. After the transmit end device obtains the target echo data, radar signal processing on the target echo data includes one of the following three cases:

(1) The transmit end device performs radar signal processing on the target echo data to obtain a measurement quantity.
(2) The transmit end device sends the target echo data to the sensing function network element, and the sensing function network element performs radar signal processing to obtain a measurement quantity.
(3) The transmit end device performs part of operations of radar signal processing to obtain a low-level measurement quantity, and sends the low-level measurement quantity to the sensing function network element; and the sensing function network element performs a remaining part of operations of radar signal processing to obtain a high-level measurement quantity.

The radar signal processing includes at least one of the following options:

(a) Matching filtering (pulse compression) processing, including:

(1) Segment a known transmit signal sequence to generate a matching filter, and segment the target reflected echo signal to perform matching filtering processing.
(2) Perform sliding window-related processing on the target reflected echo signal through a known transmit signal.

(b) One-dimensional fast Fourier transform (FFT) processing: If the sensing requirement only requires distance or speed information of the sensing target, only one-dimensional FFT processing is required; and the one-dimensional FFT processing includes:

(1) Extract target distance information through fast-time-dimensional one-dimensional FFT processing.
(2) Extract target speed information through slow-time-dimensional one-dimensional FFT processing.

(c) Two-dimensional FFT processing: If the sensing requirement requires distance and speed information of the sensing target, two-dimensional FFT processing, that is, fast-time-dimensional FFT and slow-time-dimensional FFT, are required.
(d) Three-dimensional FFT processing: If the sensing requirement requires distance, speed, and angle information of the sensing target, three-dimensional FFT processing, that is, fast-time-dimensional FFT, slow-time-dimensional FFT, and angle-dimensional FFT, are required.
(e) Angle filtering processing, to improve angle sensing precision.

The measurement quantity and grade classification of the measurement quantity include one or more of the following content:

(a) First-level measurement quantity: a measurement quantity that can be directly obtained by a receiver of a sensing node through a process such as antenna coupling, amplification, down-conversion, filtering, automatic gain control (AGC), analog to digital (A/D) sampling, digital down-conversion, or digital filtering, including: a complex signal (including I and Q channels), signal amplitude, a signal phase, signal power, polarization information, or the like; and a threshold detection result, a maximum/minimum value extraction result, or the like of the foregoing measurement quantity.
(b) Second-level measurement quantity: a measurement quantity that can be obtained by performing simple operations (including: addition, subtraction, multiplication, and division; matrix addition, subtraction, and multiplication; matrix transpose; a trigonometric relation operation; a square root operation; a power operation; or the like; and a threshold detection result, a maximum/minimum value extraction result, or the like of the foregoing operation result) on the first-level measurement quantity, including: an amplitude ratio, a phase difference, an angle of arrival (AOA) of a receive signal, an angle of departure (AOD) of a transmit signal, delay (distance) information, a distance difference, an angle difference, or the like.
(c) Third-level measurement quantity: a measurement quantity that can be obtained by performing complex operations (including: FFT/inverse fast Fourier transform (IFFT), discrete Fourier transform (DFT)/inverse discrete Fourier transform (IDFT), two-dimensional FFT (2D-FFT), three-dimensional FFT (3D-FFT), matching filtering, an autocorrelation operation, wavelet transform, digital filtering, or the like; and a threshold detection result, a maximum/minimum value extraction result, or the like of the foregoing operation result) on the first-level measurement quantity and/or the second-level measurement quantity, including: an operation result of a complex signal (or signal amplitude, or a signal phase) through FFT (or IFFT), or a maximum value data point and a power spectrum thereof, or the maximum value data point thereof; a Doppler frequency shift (speed) and Doppler spread; a speed difference; a delay-Doppler two-dimensional map or a maximum value data point thereof; a radar one-dimensional imaging map or a maximum value data point thereof; a radar two-dimensional imaging map or a maximum value data point thereof; a synthetic aperture radar (SAR) imaging map or a maximum value data point thereof; or the like.

The measurement quantity has at least one of the following features:

(a) In different sensing use cases, based on different sensing target parameters, the first-level measurement quantity, the second-level measurement quantity, and the third-level measurement quantity each may be a final sensing result; or none of them may be the final sensing result, and further processing is required to obtain the final sensing result.

(b) In different sensing use cases, based on different sensing target parameters and sensing methods, only the first-level measurement quantity (for example, people/traffic flow monitoring based on really simple syndication (RSS)) may be required; or only the first-level measurement quantity and the second-level measurement quantity (for example, radar ranging) are required; or the first-level measurement quantity, the second-level measurement quantity, and the third-level measurement quantity (for example, radar imaging) are required.

(c) In different sensing scenarios, based on computing capabilities of devices such as a sensing node, a sensing function network element, a core network, and an application server that execute a sensing process, and sensing metric requirements, a measurement quantity at each level may be obtained through an operation in a same device, or may be obtained through an operation in different devices in the sensing node, the sensing function network element, the core network, and the application server. Examples are described below:

(1) If the sensing node that executes the sensing process has a strong computing capability (such as a base station), a data amount of a sensing measurement quantity is large (a high overhead for transmission time), and the sensing requirement has a high requirement for a sensing delay, operations of the second-level measurement quantity and/or the third-level measurement quantity may be completed on the sensing node, and operation results are sent to the sensing function network element, the core network, and the application server.
(2) If the sensing node that executes the sensing process has a weak computing capability (such as an Internet of Things terminal), the data amount of the sensing measurement quantity is large (the high overhead for the transmission time), and the sensing requirement has a low requirement for the sensing delay but has a high requirement for sensing precision, operations of the first-level measurement quantity may be completed on the sensing node, and an operation result is sent to the sensing function network element, the core network, and the application server; and the sensing function network element, the core network, and the application server perform the operations of the second-level measurement quantity and/or the third-level measurement quantity.
(3) If the data amount of the sensing measurement quantity is small (a low overhead for the transmission time), a measurement quantity at any level may be completed on the sensing node or the sensing function network element or the core network or the application server under scheduling of the core network or the application server.

5. If the transmit end device or the sensing function network element detects a target during the radar signal processing, a transmit power adaptation method in the tracking mode is entered, to obtain a first candidate transmit power value at next moment. The method may include the following content:

(1) Perform adaptive transmit power adjustment based on an echo signal quality of the target. The echo signal quality of the target may be echo signal power of the target, an echo signal noise ratio (SNR) of the target, an echo signal-to-noise plus interference noise ratio (SINR) of the target, reference signal received power (RSRP), and a reference signal received quality (RSRQ).

A method for obtaining the echo signal power may include:

performing a constant false alarm rate detector (CFAR) based on a delay one-dimensional map obtained through fast-time-dimensional FFT processing of an echo signal, using a sample point with maximum amplitude of CFAR exceeding a threshold as a target sample point, and using the amplitude of the sample point as target signal amplitude; performing CFAR based on a Doppler one-dimensional map obtained through slow-time-dimensional FFT processing of the echo signal, using a sample point with maximum amplitude of CFAR exceeding the threshold as the target sample point, and using the amplitude of the sample point as the target signal amplitude;

performing CFAR based on a delay-Doppler two-dimensional map obtained through 2D-FFT processing of the echo signal, using a sample point with maximum amplitude of CFAR exceeding the threshold as the target sample point, and using the amplitude of the sample point as the target signal amplitude; and

performing CFAR based on a delay-Doppler-angle three-dimensional map obtained through 3D-FFT processing of the echo signal, using a sample point with maximum amplitude of CFAR exceeding the threshold as the target sample point, and using the amplitude of the sample point as the target signal amplitude.

In addition to the above-mentioned method using the sample point with the maximum amplitude of CFAR exceeding the threshold as the target sample point, another method for determining the target signal amplitude may also be used, which includes: using, as the target signal amplitude, a mean of the sample point with the maximum amplitude of CFAR exceeding the threshold and a plurality of sample points that are nearest to the sample point and that exceed the threshold.

A method for obtaining the SNR/SINR may include:

performing a constant false alarm rate detector (CFAR) based on a delay one-dimensional map obtained by fast-time-dimensional FFT processing of an echo signal, using a sample point with maximum amplitude of CFAR exceeding a threshold as a target sample point, using the amplitude of the sample point as target signal amplitude, using all sample points other than those that are $\pm\varepsilon$ sample points from a location of the target sample point in the one-dimensional map as interference/noise sample points, calculating average amplitude of the interference/noise sample points as interference/noise signal amplitude, and finally calculating the SNR/SINR based on the target signal amplitude and the interference/noise signal amplitude;

performing CFAR based on a Doppler one-dimensional map obtained through slow-time-dimensional FFT processing of the echo signal, using a sample point with maximum amplitude of CFAR exceeding the threshold as the target sample point, using the amplitude of the sample point as the target signal amplitude, using all sample points other than those that are $\pm\eta$ sample points from the location of the target sample point in the one-dimensional map as interference/noise sample points, calculating average amplitude of the interference/noise sample points as interference/noise signal amplitude, and finally calculating the SNR/SINR based on the target signal amplitude and the interference/noise signal amplitude;

performing CFAR based on a delay-Doppler two-dimensional map obtained through 2D-FFT processing of the echo signal, using a sample point with maximum amplitude of CFAR exceeding the threshold as the target sample point, using the amplitude of the sample point as the target signal amplitude, using all sample points other than those that are $\pm\varepsilon$ (fast-time-dimensional) and $\pm\eta$ (slow-time-dimensional) sample points from the location of the target sample point in the two-dimensional map as interference/noise sample points, calculating average amplitude of the interference/noise sample points as interference/noise signal amplitude, and finally calculating the SNR/SINR based on the target signal amplitude and the interference/noise signal amplitude; and

performing CFAR based on a delay-Doppler-angle three-dimensional map obtained through 3D-FFT processing of the echo signal, using a sample point with maximum amplitude of CFAR exceeding the threshold as the target sample point, using the amplitude of the sample point as the target signal amplitude, using all sample points other than those that are $\pm\varepsilon$ (fast-time-dimensional), $\pm\eta$ (slow-time-dimensional), and $\pm\delta$ (angle-dimensional) sample points from the location of the target sample point in the three-dimensional map as interference/noise sample points, calculating average amplitude of the interference/noise sample points as interference/noise signal amplitude, and finally calculating the SNR/SINR based on the target signal amplitude and the interference/noise signal amplitude.

In addition to the above -mentioned method using the sample point with the maximum amplitude of CFAR exceeding the threshold as the target sample point, another method for determining the target signal amplitude may also be used, which includes: using, as the target signal amplitude, a mean of the sample point with the maximum amplitude of CFAR exceeding the threshold and a plurality of sample points that are nearest to the sample point and that exceed the threshold.

A method for determining interference/noise sample points may also include: further screening the interference/noise sample points determined above. The screening includes: for the delay one-dimensional map, removing a plurality of sample points near a delay of 0, and using the remaining interference/noise sample points as interference/noise sample points; for the Doppler one-dimensional map, removing a plurality of sample points near Doppler of 0, and using the remaining interference/noise sample points as interference/noise sample points; for the delay-Doppler two-dimensional map, removing interference/noise sample points within a strip-shaped range formed by a plurality of points near the delay of 0 and an entire Doppler range, and using the remaining interference/noise sample points as interference/noise sample points; and for the delay-Doppler-angle three-dimensional map, removing interference/noise sample points within a slice-shaped range formed by a plurality of points near a time dimension of 0, the entire Doppler range, and an entire angle range, and using the remaining interference/noise sample points as interference/noise sample points.

(2) Perform adaptive transmit power adjustment based on a parameter of the target.

The parameter of the target includes a real-time distance of the target, and a real-time RCS of the target.

The real-time RCS of the target is calculated based on real-time echo power of a target signal and the real-time distance of the target.

The process of calculating the RCS of the target may be implemented by the transmit end device. Alternatively, the transmit end device may report the sensing measurement quantity to the sensing function network element, and the sensing function network element executes the calculation process.

Optionally, if the radar tracks a plurality of targets simultaneously, the transmit end device or the sensing function network element performs the foregoing transmit power adaptation adjustment for each target, and obtains a first candidate transmit power value corresponding to each target at next moment; or the transmit end device or the sensing function network element obtains, based on parameters of the targets, a comprehensive first candidate transmit power value at the next moment that is suitable for the plurality of targets.

6. The transmit end device or the sensing function network element determines the transmit power at the next moment based on the first candidate transmit power value, the transmit power requirement of the communication function, and the specified maximum transmit power.

Specifically, the transmit power needs to be greater than or equal to the first candidate transmit power value, and greater than or equal to the lowest transmit signal power required by the communication function. In addition, the signal transmit power needs to be less than or equal to the maximum transmit power value.

7. In the tracking mode, the transmit end device or the sensing function network element sets the transmit power at the next moment and executes a sensing process of the next moment, and repeats step 3 to step 6 until the sensing process is ended.

A method for ending the sensing process includes the following content:

(a) Ending of sensing timing: When sensing duration reaches a sensing duration requirement in the sensing requirement, the sensing process ends.
(b) A sensing metric meeting a criterion: When a specific sensing metric in the sensing requirement meets a requirement, the sensing process ends. For example, in a radar imaging scenario, a radar imaging operation for an imaging range in sensing requirement is completed based on an imaging resolution requirement in the sensing requirement.
(c) Beam failure: When sensing echo signal power or a sensing echo signal SNR cannot meet a relevant requirement in the sensing requirement because the target is blocked or the target moves out of a sensing range of the sensing requirement, the sensing process ends.
(d) Loss of the target: Due to a motion characteristic (such as frequent acceleration and deceleration, or frequent turning) of the target, the radar cannot establish stable tracking for the target. When the radar loses tracking for the target, the sensing process ends.

Example 2: Bistatic radar power adaptation

1. At an initial moment of sensing, a sensing signal configuration parameter is set based on a sensing target parameter, the sensing metric requirement, and sensing prior information in the sensing requirement, and capability information of the transmit end device and the receive end device. The following options are included.

(1) The sensing function network element sets the sensing signal configuration parameter based on the sensing target parameter, the sensing metric requirement, and the sensing prior information in the sensing requirement, and the obtained capability information of the transmit end device and the receive end device; and sends the sensing signal configuration parameter to the transmit end device and the receive end device.
(2) The transmit end device and the receive end device set respective relevant parts in the sensing signal configuration parameter based on the sensing target parameter, the sensing metric requirement, and the sensing prior information in the sensing requirement, and respective capability information.
(3) One of the transmit end device and the receive end device sets the sensing signal configuration parameter based on the sensing target parameter, the sensing metric requirement, and the sensing prior information in the sensing requirement, and respective capability information and obtained capability information of a peer device; and sends the sensing signal configuration parameter to the peer device.

Before the transmit end device or the receive end device sets a sensing signal configuration related to the peer device, the transmit end device or the receive end device needs to perform information interaction with the peer device, to obtain capability configuration information of the peer device.

The sensing function network element obtains the capability information of the transmit end device and the receive end device in the following two manners:

(1) The sensing function network element or another network node that can be accessed by the sensing function network element pre-stores the capability information of the transmit end device and the receive end device.

(2) The sensing function network element performs information interaction with the transmit end device and the receive end device, and the transmit end device and the receive end device respectively report the capability information to the sensing function network element.

The capability information of the transmit end device and the receive end device includes: hardware configurations, software configurations, and current software and hardware resource occupancy of the transmit end device and the receive end device, a service type that currently occupies software and hardware resources of the transmit end device and the receive end device, and service priority information.

The sensing target parameter is the same as that in Example 1.

The sensing metric is the same as that in Example 1.

The sensing prior information is the same as that in Example 1.

The sensing signal configuration parameter is the same as that in Example 1.

A process of setting the sensing signal configuration parameter processes based on the sensing metric requirement is the same as that in Example 1.

2. The sensing function network element, or the transmit end device, or the receive end device sets a first candidate initial transmit power value based on a sensing precision requirement in the sensing requirement, a typical RCS of the sensing target, and sensing resolution.

Then, final initial signal transmit power is set based on the transmit power requirement of the communication function in integrated sensing and communication, a maximum transmit power requirement in a relevant regulation, and the first candidate initial transmit power value.

Specifically, the initial signal transmit power needs to be greater than or equal to the first candidate initial transmit power value, and greater than or equal to lowest transmit signal power required by the communication function. In addition, the initial signal transmit power needs to be less than or equal to a specified maximum transmit power value.

In this step, an entity that sets the first candidate initial transmit power value needs to be the same as an entity that sets the sensing signal configuration parameter in step 1.

(1) If the sensing function network element sets the sensing signal configuration parameter in step 1, the sensing function network element still sets the first candidate initial transmit power value in this step, and sends the first candidate initial transmit power value to the transmit end device.

(2) If the transmit end device sets the sensing signal configuration parameter in step 1, the transmit end device still sets the first candidate initial transmit power value in this step.

(3) If the receive end device sets the sensing signal configuration parameter in step 1, the receive end device still sets the first candidate initial transmit power value in this step, and sends the first candidate initial transmit power value to the transmit end device.

(4) If the transmit end device and the receive end device jointly set the sensing signal configuration in step 1, the transmit end device may set the first candidate initial transmit power value in this step.

Particularly, when there is a direct communication connection between the transmit end device and the receive end device, a path loss per unit length of a sensing channel may be estimated through a communication signal between the transmit end device and the receive end device; and the path loss, the sensing precision requirement, the typical target RCS, and an action distance are applied to set the first candidate initial transmit power value.

3. The transmit end device generates and transmits the first signal based on information related to the transmit end device in the sensing signal configuration parameter and the initial transmit power.

The receive end device receives a beam and receives a target reflected echo signal of the first signal based on an information configuration related to the receive end device in the sensing signal configuration parameter, to obtain target echo data.

The first signal is the same as that in Example 1.

4. After the receive end device obtains the target echo data, radar signal processing includes one of the following three cases:

(1) The receive end device performs radar signal processing on the target echo data to obtain a measurement quantity.

(2) The receive end device sends the target echo data to the sensing function network element, and the sensing function network element performs radar signal processing to obtain a measurement quantity.

(3) The receive end device performs part of operations of radar signal processing to obtain a low-level measurement quantity, and sends the low-level measurement quantity to the sensing function network element; and the sensing function network element performs a remaining part of operations of radar signal processing to obtain a high-level measurement quantity.

A method in the receive end device sends the target echo data or the low-level measurement quantity to the sensing function network element is the same as the method in step 1.

The radar signal processing is the same as that in Example 1.

The measurement quantity and grade classification of the measurement quantity are the same as those in Example 1.

Grading of the measurement quantity is the same as that in Example 1.

5. If the receive end device or the sensing function network element detects a target during the radar signal processing, a transmit power adaptation method in the tracking mode is entered. The method may include at least one of the following:

(1) If the receive end device detects the target, the receive end device performs a link adaptation method to obtain transmit power adjustment information, and sends the transmit power adjustment information to the transmit end device.

(2) If the receive end device detects the target, the receive end device sends a parameter (such as a distance, a speed, an angle, or echo signal quality of the target) of the target to the transmit end device, and the transmit end device performs a transmit power adaptation method to obtain the transmit power adjustment information.

(3) If the receive end device detects the target, the receive end device sends the parameter (such as the distance, the speed, the angle, or the echo signal quality of the target) of the target to the sensing function network element; and the sensing function network element performs the transmit power adaptation method to obtain the transmit power adjustment information, and sends the transmit power adjustment information to the transmit end device.

(4) If the sensing function network element detects the target, the sensing function network element performs the transmit power adaptation method to obtain the transmit power adjustment information, and sends the transmit power adjustment information to the transmit end device.

A method in which the receive end device sends the parameter of the target to the sensing function network element is the same as the method in step 1. The transmit power adjustment information includes one of the following options:

(1) A transmit power value at next moment.

(2) A ratio of the transmit power value at the next moment to a transmit power value at a current moment.

(3) A difference between the transmit power value at the next moment and the transmit power value at the current moment.

A specific method for performing transmit power adaptation to obtain the transmit power adjustment information may include one of the following options:

(1) Perform adaptive transmit power adjustment based on the echo signal quality of the target.

The echo signal quality of the target may be echo signal power of the target, an echo signal noise ratio (SNR) of the target, an echo signal-to-noise plus interference noise ratio (SINR) of the target, reference signal received power (RSRP), and a reference signal received quality (RSRQ).

A method for obtaining the echo signal power is the same as that in Example 1.

A method for obtaining the SINR is the same as that in Example 1.

(2) Perform adaptive transmit power adjustment based on the parameter of the target.

The parameter of the target includes a real-time distance of the target, and a real-time RCS of the target.

The real-time RCS of the target is calculated based on real-time echo power of a target signal and the real-time distance of the target.

Optionally, if the radar tracks a plurality of targets simultaneously, the receive end device or the sensing function network element performs the foregoing transmit power adaptation adjustment for each target, and obtains a first candidate transmit power value corresponding to each target at next moment or a ratio of the transmit power at the next moment to transmit power at a current moment; or the receive end device, or the transmit end device, or the sensing function network element obtains, based on parameters of the targets, comprehensive transmit power adjustment information suitable for the plurality of targets.

6. That the transmit end device calculates the first candidate transmit power value by using the received transmit power adjustment information includes the following methods:

If the transmit power adjustment information is the transmit power value at the next moment, the power value is the first candidate transmit power value.

If the transmit power adjustment information is the difference between the transmit power value at the next moment and the transmit power value at the current moment, a sum of the transmit power value at the current moment and the transmit power adjustment information is the first candidate transmit power value.

If the transmit power adjustment information is the ratio of the transmit power at the next moment to the transmit power at the current moment, a product of the transmit power value at the current moment and the transmit power adjustment information is the first candidate transmit power value.

Then, the transmit end device determines the transmit power at the next moment based on the first candidate transmit power value, the transmit power requirement of the communication function, and the specified maximum transmit power.

Specifically, the signal transmit power needs to be greater than or equal to the first candidate transmit power value, and greater than or equal to the lowest transmit signal power required by the communication function. In addition, the signal transmit power needs to be less than or equal to the maximum transmit power value.

Optionally, if the radar tracks N targets simultaneously, the transmit end device or the sensing function network element determines transmit power at next moment based on priority sorting information of the N targets, first candidate transmit power values of targets whose priorities are top M (M≤N) or a ratio of the transmit power to transmit power at a current moment, the transmit power requirement of the communication function, and the maximum transmit power.

7. The transmit end device sets the transmit power at the next moment and executes a sensing process of the next moment, and repeats step 3 to step 7 until the sensing process is ended.

A method for ending the sensing process is the same as that in Example 1.

In this embodiment of the present disclosure, a first device adaptively adjusts transmit power of a first signal based on an echo signal quality of a first target or a parameter of the first target, to save time, energy, and other resources as much as possible while meeting a sensing requirement, so that performance of an integrated sensing and communication system and use of power resources can be optimized.

An execution entity of the transmit power determining method provided in the embodiments of the present disclosure may be a transmit power determining apparatus. In the embodiments of the present disclosure, an example in which the transmit power determining apparatus executes the transmit power determining method is used to describe the transmit power determining apparatus provided in the embodiments of the present disclosure.

Referring to FIG. 7, FIG. 7 is a schematic structural diagram of a transmit power determining apparatus 700 according to an embodiment of the present disclosure. The apparatus is used in a first device, and includes:

a first determining module 701, configured to determine target transmit power of a first signal based on an echo signal quality of a first target or a parameter of the first target, where the target transmit power indicates sending of the first signal at a second moment; and

the first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, where

the second moment is after the first moment; and the parameter of the first target includes at least one of a radar cross section RCS of the first target and distance information of the first target.

In an optional embodiment, in a case that the first device is a receive end device or a sensing function network element, the apparatus further includes:

a first sending module, configured to send transmit power adjustment information to a transmit end device based on the determined target transmit power of the first signal, where the transmit power adjustment information includes any one of the following:

the target transmit power of the first signal;

a difference between the target transmit power of the first signal and transmit power of the first signal sent at the first moment; and

a ratio of the target transmit power of the first signal to the transmit power of the first signal sent at the first moment.

In an optional embodiment, in a case that the first device is the transmit end device, the apparatus further includes:

a second sending module, configured to send the first signal based on the target transmit power of the first signal.
In an optional embodiment, the echo signal quality of the first target includes at least one of the following:

echo signal power of the first target;
an echo signal noise ratio of the first target;
an echo signal-to-noise plus interference ratio of the first target;
reference signal received power of the echo signal of the first target; and
a reference signal received quality of the echo signal of the first target.

In an optional embodiment, the first determining module includes:

a first determining submodule, configured to determine the target transmit power of the first signal based on an echo signal quality of the first target at the first moment; or
a second determining submodule, configured to determine the target transmit power of the first signal based on a predicted distance of the first target at the second moment and the echo signal quality of the first target at the first moment.

In an optional embodiment, the first determining submodule includes:

a first determining unit, configured to determine, in a case that the echo signal quality of the first target is determined to be maintained near a first preset echo quality, the target transmit power of the first signal based on transmit power of the first signal sent at the first moment, the echo signal quality of the first target at the first moment, and the first preset echo quality; or
a second determining unit, configured to determine, in a case that the echo signal quality of the first target is determined to be maintained within a first echo quality range, the target transmit power of the first signal based on the transmit power of the first signal sent at the first moment, the echo signal quality of the first target at the first moment, and the first echo quality range.

In an optional embodiment, the first determining unit includes:

a first determining subunit, configured to determine the target transmit power of the first signal based on a first formula, where the first formula is:

$$P_t' = \frac{P_{r0}}{P_r} P_t$$

where, $P_t'$ is the target transmit power of the first signal; $P_t$ is the transmit power of the first signal sent at the first moment; $P_{r0}$ is the first preset echo quality; and $P_r$ is the echo signal quality of the first target at the first moment.

In an optional embodiment, the second determining unit includes:

a second determining subunit, configured to determine the target transmit power of the first signal based on a second formula, where the second formula is:

$$P_t' = \frac{P}{P_r} P_t$$

where, $P_t'$ is the target transmit power of the first signal; $P_t$ is the transmit power of the first signal sent at the first moment; $P_r$ is the echo signal quality of the first target at the first moment; and
in a case that the echo signal quality of the first target at the first moment is greater than an upper limit echo quality of the first echo quality range, P is the upper limit echo quality of the first echo quality range; or

in a case that the echo signal quality of the first target at the first moment is less than a lower limit echo quality of the first echo quality range, P is the lower limit echo quality of the first echo quality range; or

P is an arithmetic mean or a geometric mean of the upper limit echo quality and the lower limit echo quality of the first echo quality range.

In an optional embodiment, the second determining submodule includes:

a third determining unit, configured to determine, in a case that the echo signal quality of the first target is determined to be maintained near a first preset echo quality, the target transmit power of the first signal based on transmit power of the first signal sent at the first moment, the echo signal quality of the first target at the first moment, the first preset echo quality, and the predicted distance of the first target at the second moment; or

a fourth determining unit, configured to determine, in a case that the echo signal quality of the first target is determined to be maintained within a first echo quality range, the target transmit power of the first signal based on the transmit power of the first signal sent at the first moment, the echo signal quality of the first target at the first moment, the first echo quality range, and the predicted distance of the first target at the second moment.

In an optional embodiment, the third determining unit includes:

a third determining subunit, configured to determine the target transmit power of the first signal based on a third formula, where the third formula includes:

$$P_t' = \left( \frac{R'}{R} \right)^4 \frac{P_{r0}}{P_r} P_t, \text{ or } P_t' = \left( \frac{R_t' R_r'}{R_t R_r} \right)^2 \frac{P_{r0}}{P_r} P_t$$

where, $P_t'$ is the target transmit power of the first signal; $P_t$ is the transmit power of the first signal sent at the first moment; $P_{r0}$ is the first preset echo quality; $P_r$ is the echo signal quality of the first target at the first moment; R is a distance between the first target and a signal transceiver device at the first moment in a monostatic radar scenario; $R'$ is a predicted distance between the first target and the signal transceiver device at the second moment in the monostatic radar scenario; $R_t$ is a distance between the first target and a transmit end device at the first moment in a bistatic radar scenario; $R_t'$ is a predicted distance between the first target and the transmit end device at the second moment in the bistatic radar scenario; $R_r$ is a distance between the first target and a receive end device at the first moment in the bistatic radar scenario; and $R_r'$ is a predicted distance between the first target and the receive end device at the second moment in the bistatic radar scenario.

In an optional embodiment, the fourth determining unit includes:

a fourth determining subunit, configured to determine the target transmit power of the first signal based on a fourth formula, where the fourth formula includes:

$$P_t' = \left( \frac{R'}{R} \right)^4 \frac{P}{P_r} P_t, \text{ or } P_t' = \left( \frac{R_t' R_r'}{R_t R_r} \right)^2 \frac{P}{P_r} P_t$$

where, $P_t'$ is the target transmit power of the first signal; $P_t$ is the transmit power of the first signal sent at the first moment; $P_r$ is the echo signal quality of the first target at the first moment; R is a distance between the first target and a signal transceiver device at the first moment in a monostatic radar scenario; $R'$ is a predicted distance between the first target and the signal transceiver device at the second moment in the monostatic radar scenario; $R_t$ is a distance between the first target and a transmit end device at the first moment in a bistatic radar scenario; $R_t'$ is a predicted distance between the first target and the transmit end device at the second moment in the bistatic radar scenario; $R_r$ is a distance between the first target and a receive end device at the first moment in the bistatic radar

scenario; $R'_\gamma$ is a predicted distance between the first target and the receive end device at the second moment in the bistatic radar scenario; and

in a case that the echo signal quality of the first target at the first moment is greater than an upper limit echo quality of the first echo quality range, P is the upper limit echo quality of the first echo quality range; or

in a case that the echo signal quality of the first target at the first moment is less than a lower limit echo quality of the first echo quality range, P is the lower limit echo quality of the first echo quality range; or

P is an arithmetic mean or a geometric mean of the upper limit echo quality and the lower limit echo quality of the first echo quality range.

In an optional embodiment, the apparatus further includes:

a second determining module, configured to determine the RCS of the first target based on echo signal power of the first target and a first distance of the first target relative to a transceiver device; or

determine the RCS of the first target based on the echo signal power of the first target, a second distance of the first target relative to a transmit end device, and a third distance of the first target relative to a receive end device.

In an optional embodiment, the apparatus further includes:

a third determining module, configured to determine the first preset echo quality or the first echo quality range based on a first condition, where the first condition includes at least one of the following:

an echo signal quality of a sensing metric requirement in a sensing requirement;

an echo signal quality corresponding to transmit signal power required by a communication quality of a communication function in an integrated sensing and communication application; and

an echo signal quality required by an interference level limitation of the communication function in the integrated sensing and communication application.

In this embodiment of the present disclosure, a first device adaptively adjusts transmit power of a first signal based on an echo signal quality of a first target or a parameter of the first target, to save time, energy, and other resources as much as possible while meeting a sensing requirement, so that performance of an integrated sensing and communication system and use of power resources can be optimized.

It should be noted that, the transmit power determining apparatus provided in the embodiments of the present disclosure is an apparatus that can execute the foregoing transmit power determining method, and all embodiments of the foregoing transmit power determining method are applicable to the apparatus, and can achieve same or similar beneficial effects.

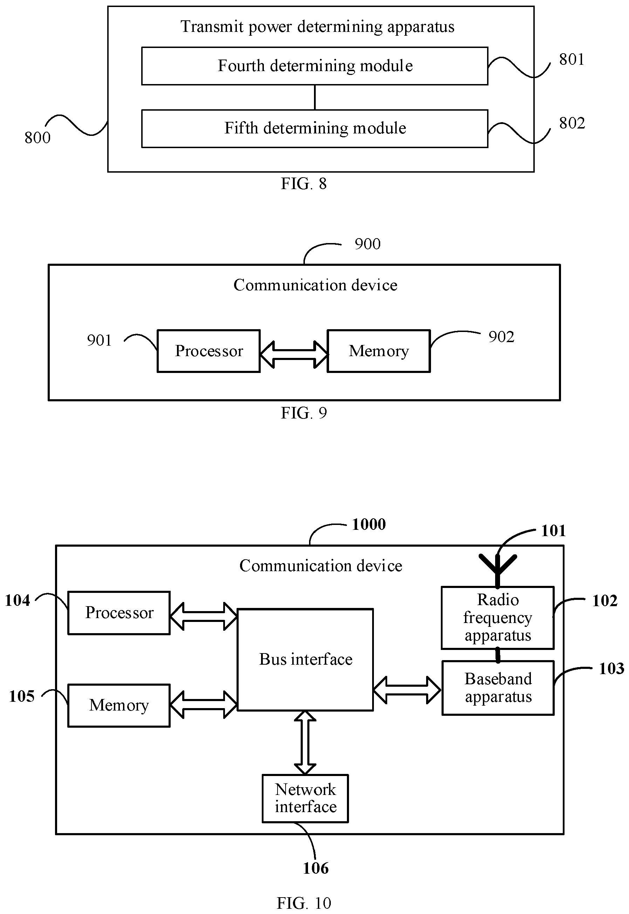

Referring to FIG. 8, FIG. 8 is a schematic structural diagram of a transmit power determining apparatus 800 according to an embodiment of the present disclosure. The apparatus is used in a third device, and includes:

a fourth determining module 801, configured to determine a candidate transmit power value of a first signal based on a radar cross section RCS of a sensing target and a maximum operating distance of radar detection included in a sensing requirement; and

a fifth determining module 802, configured to determine initial transmit power of the first signal based on the candidate transmit power value of the first signal, a transmit power requirement of a communication function in an integrated sensing and communication application, and maximum transmit power of a transmit end device.

In an optional embodiment, the fifth determining module includes:

a fifth determining submodule, configured to determine, through comparison, the greater one of the candidate transmit power value of the first signal and the transmit power requirement of the communication function in the integrated sensing and communication application; and

a sixth determining submodule, configured to determine the initial transmit power of the first signal as the maximum transmit power in a case that the determined greater one of the candidate transmit power value and the transmit power requirement is greater than the maximum transmit power of the transmit end device; or determine the initial transmit power of the first signal as the greater one of the candidate transmit power value and the transmit power requirement in a case that the determined greater one of the candidate transmit power value and the transmit power requirement is less than the maximum transmit power of the transmit end device.

In an optional embodiment, in a case that the third device is a receive end device or a sensing function network

EP 4 456 612 A1

element, the apparatus further includes:
a third sending module, configured to send the determined initial transmit power of the first signal to the transmit end device.

In an optional embodiment, in a case that the third device is the transmit end device, the apparatus further includes:

a fourth sending module, configured to send the first signal based on the initial transmit power; or
a fifth sending module, configured to receive the initial transmit power determined by the sensing function network element or the receive end device, and send the first signal based on the initial transmit power.

In this embodiment of the present disclosure, in a search mode, a third device adaptively adjusts initial transmit power of a first signal based on a sensing requirement, to save time, energy, and other resources as much as possible while meeting the sensing requirement, so that performance of an integrated sensing and communication system and use of power resources can be optimized.

It should be noted that, the transmit power determining apparatus provided in the embodiments of the present disclosure is an apparatus that can execute the foregoing transmit power determining method, and all embodiments of the foregoing transmit power determining method are applicable to the apparatus, and can achieve same or similar beneficial effects.

The transmit power determining apparatus in the embodiments of the present disclosure may be an electronic device, such as an electronic device with an operating system; or may be a component in an electronic device, such as an integrated circuit or a chip. The electronic device may be a terminal or another device other than the terminal. For example, the terminal may include, but is not limited to, the types of the terminal 11 listed above, and the another device may be a server, a network attached storage (NAS), or the like, which are not specifically limited in the embodiments of the present disclosure.

The transmit power determining apparatus provided in the embodiments of the present disclosure can implement processes implemented in the method embodiments of FIG. 1 to FIG. 6, and can achieve the same technical effects. To avoid repetition, details are not described herein again.

Optionally, as shown in FIG. 9, an embodiment of the present disclosure further provides a communication device 900, including a processor 901 and a memory 902, where the memory 902 stores a program or instructions runnable on the processor 901. For example, when the communication device 900 is a first device, the program or the instructions, when executed by the processor 901, implement all steps of the embodiments of the foregoing transmit power determining method at a first device side, and can achieve the same technical effects. When the communication device 900 is a third device, the program or the instructions, when executed by the processor 901, implement all steps of the embodiments of the foregoing transmit power determining method at a third device side, and can achieve the same technical effects. To avoid repetition, details are not described herein again.

An embodiment of the present disclosure further provides a communication device, including a processor and a communication interface. The processor is configured to determine target transmit power of a first signal based on an echo signal quality of a first target or a parameter of the first target, where the second moment is after the first moment; and the parameter of the first target includes at least one of a radar cross section RCS of the first target and distance information of the first target. Alternatively, the processor is configured to determine a candidate transmit power value of a first signal based on a radar cross section RCS of a sensing target and a maximum operating distance of radar detection included in a sensing requirement; and determine initial transmit power of the first signal based on the candidate transmit power value of the first signal, a transmit power requirement of a communication function in an integrated sensing and communication application, and maximum transmit power of a transmit end device. This embodiment of the communication device corresponds to the method embodiment of the first device or the method embodiment of the third device, and each implementation process and implementation of the foregoing method embodiments are applicable to this embodiment of the communication device, and can achieve the same technical effects.

Specifically, an embodiment of the present disclosure further provides a communication device. As shown in FIG. 10, a communication device 1000 includes an antenna 101, a radio frequency apparatus 102, a baseband apparatus 103, a processor 104, and a memory 105. The antenna 101 is connected to the radio frequency apparatus 102. In an uplink direction, the radio frequency apparatus 102 receives information by using the antenna 101, and sends the received information to the baseband apparatus 103 for processing. In a downlink direction, the baseband apparatus 103 processes information that is to be sent, and sends the information to the radio frequency apparatus 102. The radio frequency apparatus 102 processes the received information and sends the information by using the antenna 101.

The method executed by the communication device in the foregoing embodiment can be implemented in the baseband apparatus 103. The baseband apparatus 103 includes a baseband processor.

For example, the baseband apparatus 103 may include at least one baseband board, and a plurality of chips are disposed on the baseband board. As shown in FIG. 10, one chip, for example, the baseband processor, is connected to the memory 105 through a bus interface, to invoke a program in the memory 105, to execute operations of network devices shown in the foregoing method embodiments.

The communication device may further include a network interface 106. The interface is, for example, a common public radio interface (CPRI).

Specifically, the communication device 1000 in this embodiment of the present disclosure further includes: instructions or a program stored on the memory 105 and runnable on the processor 104, and the processor 104 invokes the instructions or the program stored on the memory 105 to perform the method executed by various modules shown in FIG. 7 or FIG. 8, and can achieve the same technical effects. To avoid repetition, details are not described herein again.

An embodiment of the present disclosure further provides a readable storage medium, storing a program or instructions. The program or the instructions, when executed by a processor, implement processes of the embodiments of the transmit power determining method, and can achieve the same technical effects. To avoid repetition, details are not described herein again.

The processor is the processor in the terminal in the above embodiments. The readable storage medium includes a computer-readable storage medium, for example, a computer read-only memory (ROM), a random access memory (RAM), a magnetic disk, or an optical disc.

An embodiment of the present disclosure further provides a chip, including a processor and a communication interface, where the communication interface is coupled to the processor, and the processor is configured to run a program or instructions, to implement processes of the embodiments of the transmit power determining method, and can achieve the same technical effects. To avoid repetition, details are not described herein again.

It should be understood that, the chip mentioned in this embodiment of the present disclosure may also be referred to as a system-level chip, a system chip, a chip system, a system on chip, or the like.

An embodiment of the present disclosure further provides a computer program product, stored in a storage medium. The computer program product is executed by at least one processor to implement processes of the embodiments of the transmit power determining method, and can achieve the same technical effects. To avoid repetition, details are not described herein again.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses. In addition, it should be noted that the scope of the methods and apparatuses in the implementations of the present disclosure is not limited to performing the functions in the order shown or discussed, but may also include performing, according to involved functions, the functions basically simultaneously or in a reverse order. For example, the described methods may be performed in an order different from that described, and various steps may also be added, omitted, or combined. In addition, a feature described with reference to an example may be combined in another example.

Through the descriptions of the foregoing implementations, a person skilled in the art may clearly understand that the method according to the foregoing embodiments may be implemented through software and a necessary general hardware platform, and certainly, may alternatively be implemented by hardware, but in many cases, the former manner is a better implementation. Based on such an understanding, the technical solutions in the present disclosure essentially or the part contributing to the existing technologies may be implemented in the form of a software product. The computer software product is stored in a storage medium (for example, a read-only memory (ROM)/random access memory (RAM), a magnetic disk or an optical disc), and includes several instructions for instructing a terminal (which may be a mobile phone, a computer, a server, an air conditioner, a network device, or the like) to perform the method described in the embodiments of the present disclosure.

The embodiments of the present disclosure are described above with reference to the accompanying drawings. However, the present disclosure is not limited to the foregoing specific implementations. The foregoing specific implementations are illustrative instead of limitative. Enlightened by the present disclosure, a person of ordinary skill in the art can make many forms without departing from the idea of the present disclosure and the scope of protection of the claims. All of the forms fall within the protection of the present disclosure.

**Claims**

1. A transmit power determining method, comprising:

   determining, by a first device, target transmit power of a first signal based on an echo signal quality of a first target or a parameter of the first target, wherein the target transmit power indicates sending of the first signal at a second moment; and
   the first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, wherein

the second moment is after the first moment; and the parameter of the first target comprises at least one of a radar cross section RCS of the first target and distance information of the first target.

2. The method according to claim 1, wherein in a case that the first device is a receive end device or a sensing function network element, the method further comprises:

sending, by the receive end device or the sensing function network element, transmit power adjustment information to a transmit end device based on the determined target transmit power, wherein the transmit power adjustment information comprises any one of the following:

the target transmit power;
a difference between the target transmit power and transmit power of the first signal sent at the first moment; and
a ratio of the target transmit power to the transmit power of the first signal sent at the first moment.

3. The method according to claim 1 or 2, wherein in a case that the first device is the transmit end device, the method further comprises:

sending, by the transmit end device, the first signal based on the target transmit power.

4. The method according to claim 1, wherein the echo signal quality of the first target comprises at least one of the following:

echo signal power of the first target;
an echo signal noise ratio of the first target;
an echo signal-to-noise plus interference ratio of the first target;
reference signal received power of the echo signal of the first target; and
a reference signal received quality of the echo signal of the first target.

5. The method according to claim 1 or 4, wherein the determining, by the first device, the target transmit power of the first signal based on the echo signal quality of the first target comprises:

determining, by the first device, the target transmit power of the first signal based on an echo signal quality of the first target at the first moment;
or
determining, by the first device, the target transmit power of the first signal based on a predicted distance of the first target at the second moment and the echo signal quality of the first target at the first moment.

6. The method according to claim 5, wherein the determining, by the first device, the target transmit power of the first signal based on the echo signal quality of the first target at the first moment comprises:

determining, in a case that the echo signal quality of the first target is determined to be maintained near a first preset echo quality, the target transmit power of the first signal based on transmit power of the first signal sent at the first moment, the echo signal quality of the first target at the first moment, and the first preset echo quality;
or
determining, in a case that the echo signal quality of the first target is determined to be maintained within a first echo quality range, the target transmit power of the first signal based on the transmit power of the first signal sent at the first moment, the echo signal quality of the first target at the first moment, and the first echo quality range.

7. The method according to claim 6, wherein the determining the target transmit power of the first signal based on the transmit power of the first signal sent at the first moment, the echo signal quality of the first target at the first moment, and the first preset echo quality comprises:

determining the target transmit power of the first signal based on a first formula, wherein the first formula is:

$$P'_t = \frac{P_{r0}}{P_r} P_t$$

wherein, $P'_t$ is the target transmit power of the first signal; $P_t$ is the transmit power of the first signal sent at the first moment; $P_{r0}$ is the first preset echo quality; and $P_r$ is the echo signal quality of the first target at the first moment.

8. The method according to claim 6, wherein the determining the target transmit power of the first signal based on the transmit power of the first signal sent at the first moment, the echo signal quality of the first target at the first moment, and the first echo quality range comprises:

determining the target transmit power of the first signal based on a second formula, wherein the second formula is:

$$P'_t = \frac{P}{P_r} P_t$$

wherein, $P'_t$ is the target transmit power of the first signal; $P_t$ is the transmit power of the first signal sent at the first moment; $P_r$ is the echo signal quality of the first target at the first moment; and
in a case that the echo signal quality of the first target at the first moment is greater than an upper limit echo quality of the first echo quality range, P is the upper limit echo quality of the first echo quality range; or
in a case that the echo signal quality of the first target at the first moment is less than a lower limit echo quality of the first echo quality range, P is the lower limit echo quality of the first echo quality range; or
P is an arithmetic mean or a geometric mean of the upper limit echo quality and the lower limit echo quality of the first echo quality range.

9. The method according to claim 5, wherein the determining, by the first device, the target transmit power of the first signal based on the predicted distance of the first target at the second moment and the echo signal quality of the first target at the first moment comprises:

determining, in a case that the echo signal quality of the first target is determined to be maintained near a first preset echo quality, the target transmit power of the first signal based on transmit power of the first signal sent at the first moment, the echo signal quality of the first target at the first moment, the first preset echo quality, and the predicted distance of the first target at the second moment;
or
determining, in a case that the echo signal quality of the first target is determined to be maintained within a first echo quality range, the target transmit power of the first signal based on the transmit power of the first signal sent at the first moment, the echo signal quality of the first target at the first moment, the first echo quality range, and the predicted distance of the first target at the second moment.

10. The method according to claim 9, wherein the determining the target transmit power of the first signal based on the transmit power of the first signal sent at the first moment, the echo signal quality of the first target at the first moment, the first preset echo quality, and the predicted distance of the first target at the second moment comprises:

determining the target transmit power of the first signal based on a third formula, wherein the third formula comprises:

$$P'_t = \left(\frac{R'}{R}\right)^4 \frac{P_{r0}}{P_r} P_t, \text{ or } P'_t = \left(\frac{R'_t R'_r}{R_t R_r}\right)^2 \frac{P_{r0}}{P_r} P_t$$

wherein, $P'_t$ is the target transmit power of the first signal; $P_t$ is the transmit power of the first signal sent at the first moment; $P_{r0}$ is the first preset echo quality; $P_r$ is the echo signal quality of the first target at the first moment; R is a distance between the first target and a signal transceiver device at the first moment in a monostatic radar scenario; $R'$ is a predicted distance between the first target and the signal transceiver device at the second moment in the monostatic radar scenario; $R_t$ is a distance between the first target and a transmit end device at the first moment in a bistatic radar scenario; $R_t'$ is a predicted distance between the first target and the transmit end device at the second moment in the bistatic radar scenario; $R_r$ is a distance between the first target and a receive end device at the first moment in the bistatic radar scenario; and $R_r'$ is a predicted distance between the first target and the receive end device at the second moment in the bistatic radar scenario.

11. The method according to claim 9, wherein the determining the target transmit power of the first signal based on the transmit power of the first signal sent at the first moment, the echo signal quality of the first target at the first moment, the first echo quality range, and the predicted distance of the first target at the second moment comprises:

determining the target transmit power of the first signal based on a fourth formula, wherein the fourth formula comprises:

$$ P_t' = \left(\frac{R'}{R}\right)^4 \frac{P}{P_r} P_t, \text{ or } P_t' = \left(\frac{R_t' R_r'}{R_t R_r}\right)^2 \frac{P}{P_r} P_t $$

wherein, $P_t'$ is the target transmit power of the first signal; $P_t$ is the transmit power of the first signal sent at the first moment; $P_r$ is the echo signal quality of the first target at the first moment; R is a distance between the first target and a signal transceiver device at the first moment in a monostatic radar scenario; R' is a predicted distance between the first target and the signal transceiver device at the second moment in the monostatic radar scenario; $R_t$ is a distance between the first target and a transmit end device at the first moment in a bistatic radar scenario; $R_t'$ is a predicted distance between the first target and the transmit end device at the second moment in the bistatic radar scenario; $R_r$ is a distance between the first target and a receive end device at the first moment in the bistatic radar scenario; $R_r'$ is a predicted distance between the first target and the receive end device at the second moment in the bistatic radar scenario; and
in a case that the echo signal quality of the first target at the first moment is greater than an upper limit echo quality of the first echo quality range, P is the upper limit echo quality of the first echo quality range; or
in a case that the echo signal quality of the first target at the first moment is less than a lower limit echo quality of the first echo quality range, P is the lower limit echo quality of the first echo quality range; or
P is an arithmetic mean or a geometric mean of the upper limit echo quality and the lower limit echo quality of the first echo quality range.

12. The method according to claim 1, wherein before the determining the target transmit power of the first signal based on the parameter of the first target, the method further comprises:

determining the RCS of the first target based on echo signal power of the first target and a first distance of the first target relative to a transceiver device;
or
determining the RCS of the first target based on the echo signal power of the first target, a second distance of the first target relative to a transmit end device, and a third distance of the first target relative to a receive end device.

13. The method according to claim 6 or 9, wherein the method further comprises:
determining the first preset echo quality or the first echo quality range based on a first condition, wherein the first condition comprises at least one of the following:

an echo signal quality of a sensing metric requirement in a sensing requirement;
an echo signal quality corresponding to transmit signal power required by a communication quality of a communication function in an integrated sensing and communication application; and
an echo signal quality required by an interference level limitation of the communication function in the integrated sensing and communication application.

**14.** A transmit power determining method, comprising:

determining, by a third device, a candidate transmit power value of a first signal based on a radar cross section RCS of a sensing target and a maximum operating distance of radar detection comprised in a sensing requirement; and

determining, by the third device, initial transmit power of the first signal based on the candidate transmit power value of the first signal, a transmit power requirement of a communication function in an integrated sensing and communication application, and maximum transmit power of a transmit end device.

**15.** The method according to claim 14, wherein the determining, by the third device, initial transmit power of the first signal based on the candidate transmit power value of the first signal, a transmit power requirement of a communication function in an integrated sensing and communication application, and maximum transmit power of a transmit end device comprises:

determining through comparison, by the third device, the greater one of the candidate transmit power value of the first signal and the transmit power requirement of the communication function in the integrated sensing and communication application; and

determining the initial transmit power of the first signal as the maximum transmit power in a case that the determined greater one of the candidate transmit power value and the transmit power requirement is greater than the maximum transmit power of the transmit end device; or determining the initial transmit power of the first signal as the greater one of the candidate transmit power value and the transmit power requirement in a case that the determined greater one of the candidate transmit power value and the transmit power requirement is less than the maximum transmit power of the transmit end device.

**16.** The method according to claim 14, wherein in a case that the third device is a receive end device or a sensing function network element, the method further comprises:
sending, by the receive end device or the sensing function network element, the determined initial transmit power of the first signal to the transmit end device.

**17.** The method according to claim 14 or 16, wherein in a case that the third device is the transmit end device, the method further comprises:

sending, by the transmit end device, the first signal based on the initial transmit power;
or
receiving, by the transmit end device, the initial transmit power determined by the sensing function network element or the receive end device, and sending the first signal based on the initial transmit power.

**18.** A transmit power determining apparatus, used in a first device, the apparatus comprising:

a first determining module, configured to determine target transmit power of a first signal based on an echo signal quality of a first target or a parameter of the first target, wherein the target transmit power indicates sending of the first signal at a second moment; and

the first device detects an echo signal of the first signal sent at a first moment to obtain the echo signal quality of the first target or the parameter of the first target; or the first device receives the echo signal quality of the first target or the parameter of the first target from a second device, and the echo signal of the first signal sent at the first moment is detected by the second device to obtain the echo signal quality of the first target or the parameter of the first target, wherein

the second moment is after the first moment; and the parameter of the first target comprises at least one of a radar cross section RCS of the first target and distance information of the first target.

**19.** The apparatus according to claim 18, wherein the first determining module comprises:

a first determining submodule, configured to determine the target transmit power of the first signal based on an echo signal quality of the first target at the first moment;
or
a second determining submodule, configured to determine the target transmit power of the first signal based on a predicted distance of the first target at the second moment and the echo signal quality of the first target at the first moment.

20. The apparatus according to claim 19, wherein the first determining submodule comprises:

a first determining unit, configured to determine, in a case that the echo signal quality of the first target is determined to be maintained near a first preset echo quality, the target transmit power of the first signal based on transmit power of the first signal sent at the first moment, the echo signal quality of the first target at the first moment, and the first preset echo quality;
or
a second determining unit, configured to determine, in a case that the echo signal quality of the first target is determined to be maintained within a first echo quality range, the target transmit power of the first signal based on the transmit power of the first signal sent at the first moment, the echo signal quality of the first target at the first moment, and the first echo quality range.

21. The apparatus according to claim 20, wherein the first determining unit comprises:

a first determining subunit, configured to determine the target transmit power of the first signal based on a first formula, wherein the first formula is:

$$P'_t = \frac{P_{r0}}{P_r} P_t$$

wherein, $P'_t$ is the target transmit power of the first signal; $P_t$ is the transmit power of the first signal sent at the first moment; $P_{r0}$ is the first preset echo quality; and $P_r$ is the echo signal quality of the first target at the first moment.

22. The apparatus according to claim 20, wherein the second determining unit comprises:

a second determining subunit, configured to determine the target transmit power of the first signal based on a second formula, wherein the second formula is:

$$P'_t = \frac{P}{P_r} P_t$$

wherein, $P'_t$ is the target transmit power of the first signal; $P_t$ is the transmit power of the first signal sent at the first moment; $P_r$ is the echo signal quality of the first target at the first moment; and
in a case that the echo signal quality of the first target at the first moment is greater than an upper limit echo quality of the first echo quality range, P is the upper limit echo quality of the first echo quality range; or
in a case that the echo signal quality of the first target at the first moment is less than a lower limit echo quality of the first echo quality range, P is the lower limit echo quality of the first echo quality range; or
P is an arithmetic mean or a geometric mean of the upper limit echo quality and the lower limit echo quality of the first echo quality range.

23. The apparatus according to claim 19, wherein the second determining submodule comprises:

a third determining unit, configured to determine, in a case that the echo signal quality of the first target is determined to be maintained near a first preset echo quality, the target transmit power of the first signal based on transmit power of the first signal sent at the first moment, the echo signal quality of the first target at the first moment, the first preset echo quality, and the predicted distance of the first target at the second moment;
or
a fourth determining unit, configured to determine, in a case that the echo signal quality of the first target is determined to be maintained within a first echo quality range, the target transmit power of the first signal based on the transmit power of the first signal sent at the first moment, the echo signal quality of the first target at the first moment, the first echo quality range, and the predicted distance of the first target at the second moment.

24. The apparatus according to claim 23, wherein the third determining unit comprises:

a third determining subunit, configured to determine the target transmit power of the first signal based on a third formula, wherein the third formula comprises:

$$P_t' = \left(\frac{R'}{R}\right)^4 \frac{P_{r0}}{P_r} P_t, \text{ or } P_t' = \left(\frac{R_t' R_r'}{R_t R_r}\right)^2 \frac{P_{r0}}{P_r} P_t$$

wherein, $P_t'$ is the target transmit power of the first signal; $P_t$ is the transmit power of the first signal sent at the first moment; $P_{r0}$ is the first preset echo quality; $P_r$ is the echo signal quality of the first target at the first moment; R is a distance between the first target and a signal transceiver device at the first moment in a monostatic radar scenario; R' is a predicted distance between the first target and the signal transceiver device at the second moment in the monostatic radar scenario; $R_t$ is a distance between the first target and a transmit end device at the first moment in a bistatic radar scenario; $R_t'$ is a predicted distance between the first target and the transmit end device at the second moment in the bistatic radar scenario; $R_r$ is a distance between the first target and a receive end device at the first moment in the bistatic radar scenario; and $R_r'$ is a predicted distance between the first target and the receive end device at the second moment in the bistatic radar scenario.

25. The apparatus according to claim 23, wherein the fourth determining unit comprises:

a fourth determining subunit, configured to determine the target transmit power of the first signal based on a fourth formula, wherein the fourth formula comprises:

$$P_t' = \left(\frac{R'}{R}\right)^4 \frac{P}{P_r} P_t, \text{ or } P_t' = \left(\frac{R_t' R_r'}{R_t R_r}\right)^2 \frac{P}{P_r} P_t$$

wherein, $P_t'$ is the target transmit power of the first signal; $P_t$ is the transmit power of the first signal sent at the first moment; $P_r$ is the echo signal quality of the first target at the first moment; R is a distance between the first target and a signal transceiver device at the first moment in a monostatic radar scenario; R' is a predicted distance between the first target and the signal transceiver device at the second moment in the monostatic radar scenario; $R_t$ is a distance between the first target and a transmit end device at the first moment in a bistatic radar scenario; $R_t'$ is a predicted distance between the first target and the transmit end device at the second moment in the bistatic radar scenario; $R_r$ is a distance between the first target and a receive end device at the first moment in the bistatic radar scenario; $R_r'$ is a predicted distance between the first target and the receive end device at the second moment in the bistatic radar scenario; and
in a case that the echo signal quality of the first target at the first moment is greater than an upper limit echo quality of the first echo quality range, P is the upper limit echo quality of the first echo quality range; or
in a case that the echo signal quality of the first target at the first moment is less than a lower limit echo quality of the first echo quality range, P is the lower limit echo quality of the first echo quality range; or
P is an arithmetic mean or a geometric mean of the upper limit echo quality and the lower limit echo quality of the first echo quality range.

26. A transmit power determining apparatus, used in a third device, the apparatus comprising:

a fourth determining module, configured to determine a candidate transmit power value of a first signal based on a radar cross section RCS of a sensing target and a maximum operating distance of radar detection comprised in a sensing requirement; and
a fifth determining module, configured to determine initial transmit power of the first signal based on the candidate transmit power value of the first signal, a transmit power requirement of a communication function in an integrated sensing and communication application, and maximum transmit power of a transmit end device.

27. A first device, comprising a processor and a memory, wherein the memory stores a program or instructions runnable on the processor, and the program or the instructions, when executed by the processor, implement steps of the transmit power determining method according to any one of claims 1 to 13.

28. A third device, comprising a processor and a memory, wherein the memory stores a program or instructions runnable on the processor, and the program or the instructions, when executed by the processor, implement steps of the transmit power determining method according to any one of claims 14 to 17.

29. A readable storage medium, storing a program or instructions, wherein the program or the instructions, when executed by a processor, implement steps of the transmit power determining method according to any one of claims 1 to 13, or implement steps of the transmit power determining method according to any one of claims 14 to 17.

12

Network side
device

11

11

Terminal

Terminal

FIG. 1

Start

A third device determines a candidate transmit power value of a first
signal based on a radar cross section RCS of a sensing target and a
maximum operating distance of radar detection included in a sensing
requirement

201

The third device determines initial transmit power of the first signal
based on the candidate transmit power value of the first signal, a
transmit power requirement of a communication function in an
integrated sensing and communication application, and maximum
transmit power of a transmit end device

202

End

FIG. 2

Sensing function
network element

Transmit end
device

Receive end
device

FIG. 3

Sensing function
network element

Transmit end
device

Receive end
device

FIG. 4

Sensing function
network element

Transmit end
device/receive
end device

Receive end
device/transmit
end device

FIG. 5

Start

A first device determines target transmit power of a first signal
based on an echo signal quality of a first target or a parameter of
the first target, where the target transmit power indicates sending
of the first signal at a second moment

601

End

FIG. 6

Transmit power determining apparatus

First determining module

700

701

FIG. 7

Transmit power determining apparatus

Fourth determining module

Fifth determining module

800

801

802

FIG. 8

900

Communication device

901

Processor

Memory

902

FIG. 9

1000

101

Communication device

104

Processor

105

Memory

Bus interface

Radio frequency apparatus

102

Baseband apparatus

103

Network interface

106

FIG. 10

**INTERNATIONAL SEARCH REPORT**

| International application No. |
|---|
| **PCT/CN2022/140336** |

**A. CLASSIFICATION OF SUBJECT MATTER**

H04W52/14(2009.01)i;G01S13/66(2006.01)n

According to International Patent Classification (IPC) or to both national classification and IPC

**B. FIELDS SEARCHED**

Minimum documentation searched (classification system followed by classification symbols)

IPC: H04L, H04W, G01S

Documentation searched other than minimum documentation to the extent that such documents are included in the fields searched

Electronic data base consulted during the international search (name of data base and, where practicable, search terms used)

CNKI, 3GPP, CNTXT, ENTXTC, VEN: 初始, 单基地, 单站, 双基地, 双站, 雷达, 发射, 功率, 回波, 截面, 范围, 距离, initial, unistatic, bistatic, radar, transm+, power, echo, RCS, range, distance

**C. DOCUMENTS CONSIDERED TO BE RELEVANT**

| Category* | Citation of document, with indication, where appropriate, of the relevant passages | Relevant to claim No. |
|---|---|---|
| Y | CN 112639509 A (HUAWEI TECHNOLOGIES CO., LTD.) 09 April 2021 (2021-04-09) description, paragraphs 0073-0125, and figure 8 | 1-9, 12-13, 18-23, 27 |
| Y | CN 109324507 A (NORTHWESTERN POLYTECHNIC UNIVERSITY) 12 February 2019 (2019-02-12) description, paragraphs 0003-0048 | 1-9, 12-13, 18-23, 27 |
| X | CN 109324507 A (NORTHWESTERN POLYTECHNIC UNIVERSITY) 12 February 2019 (2019-02-12) description, paragraphs 0003-0048 | 14-17, 26, 28-29 |
| A | CN 108732543 A (NANJING UNIVERSITY OF AERONAUTICS AND ASTRONAUTICS) 02 November 2018 (2018-11-02) entire document | 1-29 |
| A | CN 111654832 A (CHINA SOUTHERN POWER GRID DIGITAL POWER GRID RESEARCH INSTITUTE CO., LTD.) 11 September 2020 (2020-09-11) entire document | 1-29 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **15 February 2023** | **17 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
|---|
| **PCT/CN2022/140336** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2020172892 A1 (HUAWEI TECHNOLOGIES CO., LTD.) 03 September 2020 (2020-09-03)<br>entire document | 1-29 |

Form PCT/ISA/210 (second sheet) (July 2022)

**INTERNATIONAL SEARCH REPORT**
Information on patent family members

International application No.

**PCT/CN2022/140336**

| Patent document cited in search report | | | Publication date (day/month/year) | Patent family member(s) | Publication date (day/month/year) |
|---|---|---|---|---|---|
| CN | 112639509 | A | 09 April 2021 | None | |
| CN | 109324507 | A | 12 February 2019 | None | |
| CN | 108732543 | A | 02 November 2018 | None | |
| CN | 111654832 | A | 11 September 2020 | None | |
| WO | 2020172892 | A1 | 03 September 2020 | None | |

Form PCT/ISA/210 (patent family annex) (July 2022)

**EP 4 456 612 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111583321